(19) **Europäisches Patentamt / European Patent Office / Office européen des brevets**

(11) **EP 4 628 199 A1**

(12) **EUROPEAN PATENT APPLICATION**
published in accordance with Art. 153(4) EPC

(43) Date of publication:
08.10.2025 Bulletin 2025/41

(21) Application number: 23897884.5

(22) Date of filing: 30.11.2023

(51) International Patent Classification (IPC):
B01D 71/56 (2006.01)     B01D 63/10 (2006.01)
B01D 69/00 (2006.01)     B01D 69/02 (2006.01)
B01D 69/10 (2006.01)     B01D 69/12 (2006.01)

(52) Cooperative Patent Classification (CPC):
B01D 63/10; B01D 69/00; B01D 69/02;
B01D 69/10; B01D 69/12; B01D 71/56

(86) International application number:
PCT/JP2023/042999

(87) International publication number:
WO 2024/117238 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.11.2022 JP 2022192377
30.11.2022 JP 2022192378
29.09.2023 JP 2023169359

(71) Applicant: Toray Industries, Inc.
Tokyo 103-8666 (JP)

(72) Inventors:
• YOSHIZAKI Tomoya
Otsu-shi, Shiga 520-8558 (JP)

• SOYA Takanori
Otsu-shi, Shiga 520-8558 (JP)
• MIYAMOTO Ryoma
Otsu-shi, Shiga 520-8558 (JP)
• KOIWA Masakazu
Otsu-shi, Shiga 520-8558 (JP)
• TOKUDA Takuto
Otsu-shi, Shiga 520-8558 (JP)
• AOYAMA Shigeru
Otsu-shi, Shiga 520-8558 (JP)

(74) Representative: Hoefer & Partner Patentanwälte
mbB
Pilgersheimer Straße 20
81543 München (DE)

(54) **COMPOSITE SEMIPERMEABLE MEMBRANE, COMPOSITE SEMIPERMEABLE MEMBRANE ELEMENT, AND FILTER DEVICE**

(57) Provided are a composite semipermeable membrane and a composite semipermeable membrane element that demonstrate excellent monovalent ion/polyvalent ion selection and separation performance under acidic conditions. The present invention relates to a composite semipermeable membrane that comprises a porous support layer and a separation function layer that is on one surface side of the porous support layer. The separation function layer contains a semi-aromatic crosslinked polyamide. When the surface of the composite semipermeable membrane on the separation function layer side is a first surface, the surface on the reverse side from the first surface is a second surface, and a positron beam is irradiated at the composite semipermeable membrane from the first surface side, the average pore diameter R1 of the separation function layer at a positron beam intensity of 0.1 keV and the average pore diameter R2 of the separation function layer at a positron beam intensity of 0.5 keV are at least 0.30 nm but no more than 2.00 nm as derived by positron annihilation lifetime measurement, and $0.90 \leq R1/R2 \leq 1.10$.

**(Cont. next page)**

EP 4 628 199 A1

# FIG. 1

1

4
3
2

**Description**

TECHNICAL FIELD

The present invention relates to a composite semipermeable membrane, a composite semipermeable membrane element, and a filtration device.

BACKGROUND ART

There are various techniques for removing substances (for example, salts) dissolved in a solvent (for example, water) in relation to separation of a mixture, and in recent years, membrane separation methods have been widely used as processes for energy saving and resource saving. Membranes used in the membrane separation method include a microfiltration membrane, an ultrafiltration membrane, a nanofiltration membrane, a reverse osmosis membrane, and the like, and these membranes are used, for example, to produce drinking water from seawater, brackish water, water containing a harmful substance, and the like, to soften drinking water, to produce ultrapure water for food and industrial applications, to treat wastewater, or to recover a valuable material.

Most reverse osmosis membranes and nanofiltration membranes currently on the market are composite semipermeable membranes, and there are two kinds: one including an active layer in which a gel layer and a polymer are crosslinked on a support membrane, and one including an active layer in which a monomer is polycondensed on a support membrane. Among them, a composite semipermeable membrane obtained by coating a support membrane with a separation functional layer made of a crosslinked polyamide, which is obtained by a polycondensation reaction of a polyfunctional amine and a polyfunctional acid halide, is widely used as a separation membrane having high permeability and high selective separability.

In the related art, the nanofiltration membrane has been widely used for separating a specific substance from a mixed solution containing a monovalent ion, a polyvalent ion, and an organic substance, and a nanofiltration membrane including a separation functional layer made of a crosslinked polyamide obtained by reacting an aliphatic amine with an acid halide has been proposed.

For example, a nanofiltration membrane made of a polyamide obtained by reacting piperazine with a polyfunctional aromatic carboxylic acid chloride is disclosed (Patent Literature 1). On the other hand, one of problems occurring in a membrane separation plant using the nanofiltration membrane is fouling caused by inorganic substances or organic substances. The nanofiltration membrane has a remarkable decrease in water permeation performance due to the fouling. As a method for preventing this, a method of recovering the water permeation performance by washing with an acid or a chemical has been proposed, and a nanofiltration membrane having high chemical resistance is also known (Patent Literature 2). In addition, it is also known that, as a nanofiltration membrane having high chemical resistance, by forming a hollow pleated polyamide separation functional layer having a large specific surface area and having a hydrophobic chemical composition, hydrolysis of the polyamide by an acid or an alkali is prevented, so that excellent polyvalent ion removability can be maintained over a long period of time (Patent Literature 3).

CITATION LIST

PATENT LITERATURE

Patent Literature 1: JP2007-277298A
Patent Literature 2: JP2003-534422A
Patent Literature 3: WO 2021/085600

SUMMARY OF INVENTION

TECHNICAL PROBLEM

As described above, the performance required for the nanofiltration membrane includes not only water permeation performance and selective separation performance but also chemical resistance, but the membrane described in Patent Literature 1 has low chemical resistance. On the other hand, the membrane described in Patent Literature 2 has chemical resistance higher than that of the membrane described in Patent Literature 1, but has a problem in that the selective separability for a monovalent ion and a polyvalent ion is low. In addition, the membrane described in Patent Literature 3 prevents hydrolysis due to contact with an acid or an alkali and maintains high polyvalent ion removal performance under a neutral condition, but since a pore diameter thereof changes under an acidic condition, there is room for improvement in selective separability for the monovalent ion and the polyvalent ion when the membrane is used under an acidic condition.

An object of the present invention is to provide a composite semipermeable membrane, a composite semipermeable membrane element, and a filtration device that exhibit excellent monovalent ion/polyvalent ion selective separation performance under an acidic condition.

SOLUTION TO PROBLEM

In order to achieve the above object, the present invention has the following configurations.

[1] A composite semipermeable membrane including:

a porous support layer; and
a separation functional layer located on one surface side of the porous support layer, in which
the separation functional layer contains a semi-aromatic crosslinked polyamide,
in the composite semipermeable membrane, a surface on a separation functional layer side is defined as a first surface and a surface on a side opposite to the first surface is defined as a second surface, and
when the composite semipermeable membrane is irradiated with a positron beam from a first surface side, an average pore diameter R1 and an average pore diameter R2 of the separation functional layer derived from a positron annihilation lifetime measurement method are each 0.30 nm or more and 2.00 nm or less, and $0.90 \leq R1/R2 \leq 1.10$ is satisfied,
R1: average pore diameter under condition of positron beam intensity of 0.1 keV, and
R2: average pore diameter under condition of positron beam intensity of 0.5 keV.

[2] The composite semipermeable membrane according to the above [1], in which the average pore diameter R1 is 0.55 nm or more and 1.00 nm or less.
[3] The composite semipermeable membrane according to the above [1] or [2], in which in a cross section of the separation functional layer perpendicular to a surface of the composite semipermeable membrane, a total number P1 of pores having a pore diameter of 0.30 nm or more and 1.20 nm or less, a total number P2 of pores having a pore diameter of 0.50 nm or more and less than 0.80 nm, a total number P3 of pores having a pore diameter of 0.80 nm or more and 1.20 nm or less, and a total number P4 of pores having a pore diameter of more than 1.20 nm satisfy $0.20 < P2/P1 < 0.40$, $P3/P2 < 0.20$, and $P4/P1 \leq 0.01$.
[4] The composite semipermeable membrane according to any one of the above [1] to [3], in which in a cross section of the separation functional layer perpendicular to a surface of the composite semipermeable membrane, when regions obtained by dividing the separation functional layer into five regions at an equal interval from the first surface side toward a second surface side are defined as region a to region e, an amino group density Nb in the region b and an amino group density Nd in the region d satisfy $Nb/Nd \leq 0.80$.
[5] The composite semipermeable membrane according to the above [4], in which the Nb is $1.0 \times 10^{-23}$ mol/nm$^2$ or less.
[6] The composite semipermeable membrane according to any one of the above [1] to [5], in which in a case where a glucose permeability when 1000 ppm of a glucose aqueous solution having a temperature of 25°C and a pH of 6.5 is permeated through the composite semipermeable membrane at an operation pressure of 0.5 MPa is defined as B, and a sucrose permeability when 1000 ppm of a sucrose aqueous solution having a temperature of 25°C and a pH of 6.5 is permeated through the composite semipermeable membrane at an operation pressure of 0.5 MPa is defined as C, B/C is 10 or more.
[7] The composite semipermeable membrane according to any one of the above [1] to [6], in which the separation functional layer has a hollow pleated structure.
[8] A composite semipermeable membrane element including the composite semipermeable membrane according to any one of the above [1] to [7].
[9] A filtration device including the composite semipermeable membrane element according to the above [8].

ADVANTAGEOUS EFFECTS OF INVENTION

In the composite semipermeable membrane according to the present invention, since a pore diameter distribution in a thickness direction of the separation functional layer is uniform, a direction in which ions diffuse in the separation functional layer is uniform, and it is possible to effectively prevent permeation of a polyvalent ion while sufficiently preventing permeation resistance of a monovalent ion having a size capable of freely moving in the separation functional layer, and as a result, it is possible to realize excellent monovalent ion/polyvalent ion selective separation performance under an acidic condition.

BRIEF DESCRIPTION OF DRAWINGS

[FIG. 1] FIG. 1 is a schematic diagram showing a cross section of a composite semipermeable membrane according to one embodiment of the present invention.
[FIG. 2] FIG. 2 is a schematic diagram showing a composite semipermeable membrane element according to one embodiment of the present invention.
[FIG. 3] FIG. 3 is a schematic diagram showing a cross section of a separation functional layer in the composite semipermeable membrane according to the embodiment of the present invention.
[FIG. 4] FIG. 4 is a schematic diagram of a hollow pleated structure of the separation functional layer of the composite semipermeable membrane according to the embodiment of the present invention.

DESCRIPTION OF EMBODIMENTS

Hereinafter, embodiments of the present invention are described in detail, but the present invention is not limited to the following embodiments and can be freely modified and implemented without departing from the gist of the present invention.

1. Composite Semipermeable Membrane

A composite semipermeable membrane according to the present embodiment includes a porous support layer and a separation functional layer provided on one surface side of the porous support layer. In the composite semipermeable membrane, a surface on a separation functional layer side is referred to as a first surface, and a surface on a side opposite to the first surface is referred to as a second surface. The composite semipermeable membrane according to the present embodiment is a membrane in a region having fractionation characteristics positioned between a reverse osmosis membrane and an ultrafiltration membrane, and is generally defined as a nanofiltration membrane.
The reverse osmosis membrane generally has a tendency of removing most of organic substances and ions, while the ultrafiltration membrane generally does not remove most of ion species but removes high molecular weight organic substances.

(1-1) Support Membrane

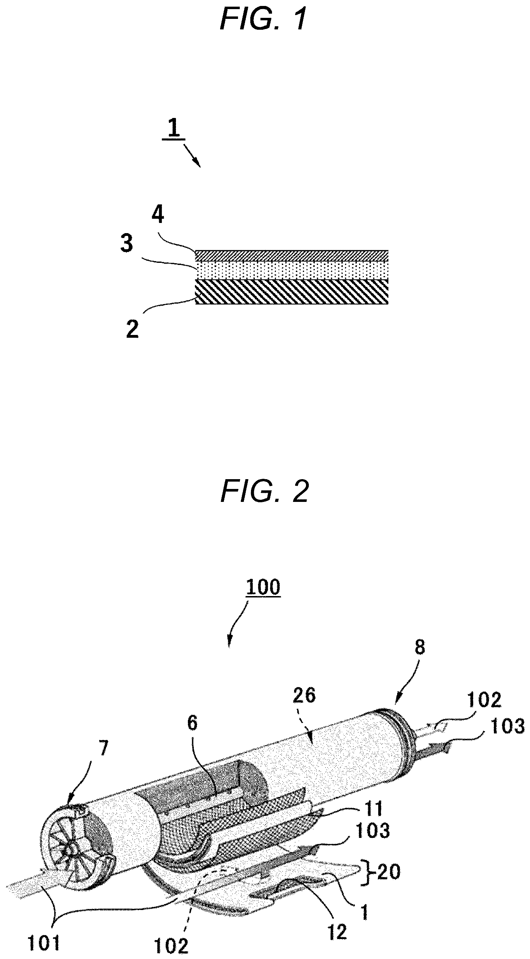

The composite semipermeable membrane according to the present embodiment includes a porous support layer and a separation functional layer, and the porous support layer is a layer that constitutes a support membrane. The support membrane may include only a porous support layer, or may include a substrate 2 and a porous support layer 3 disposed on the substrate 2 as shown in FIG. 1. That is, as shown in FIG. 1, a composite semipermeable membrane 1 includes the porous support layer 3 and a separation functional layer 4, and the support membrane constituted by the porous support layer 3 may include only the porous support layer 3, or may include the substrate 2 and the porous support layer 3.
The support membrane is for imparting strength to the composite semipermeable membrane by supporting the separation functional layer. The support membrane itself does not substantially have separation performance for low molecular weight organic substances, ions, and the like.
A size and a distribution of pores in the support membrane are not particularly limited, and for example, it is preferable that the pores are uniform fine pores or fine pores gradually increasing in size from a surface on which the separation functional layer is formed to the other surface, and a size of each fine pore is 0.1 nm or more and 100 nm or less on the surface on which the separation functional layer is formed.
Examples of a material of the substrate include a fabric made of at least one kind selected from a polyester and an aromatic polyamide. Among them, it is particularly preferable to use a polyester having high mechanical and thermal stability.
Examples of the fabric for use in the substrate include a long fiber nonwoven fabric and a short fiber nonwoven fabric. It is preferable to use a long fiber nonwoven fabric since an excellent membrane forming property is required such that, when a polymer solution is cast onto the substrate, no defects such as penetration of the polymer solution through the back due to over-osmosis, peeling-off of the porous support layer from the substrate, or membrane non-uniformity or pinholes caused by fluffing of the substrate occur.
Examples of the long fiber nonwoven fabric include a long fiber nonwoven fabric composed of thermoplastic continuous filaments. When the substrate contains a long fiber nonwoven fabric, it is possible to prevent non-uniformity during polymer solution casting caused by fluffing and membrane defects, which occur when only the short fiber nonwoven fabric is used. In addition, in a step of continuously forming the composite semipermeable membrane, a long fiber nonwoven fabric having excellent dimensional stability is also preferably used as the substrate since the substrate is tensioned in a membrane formation direction.

In particular, an orientation of fibers on the surface of the substrate opposite to the surface in contact with the porous support layer is preferably a vertical orientation with respect to the membrane formation direction since the strength of the substrate can be maintained and membrane breakage or the like can be prevented. Here, the "vertical orientation" means that the orientation direction of the fibers is parallel to the membrane formation direction. Conversely, in the case where the orientation direction of the fibers is perpendicular to the membrane formation direction, it is referred to as a horizontal orientation.

A fiber orientation degree of the fibers is preferably 0° or more and 25° or less. Here, the "fiber orientation degree" is an index indicating the orientation of the fibers of the nonwoven fabric, and means an average angle of the fibers constituting the nonwoven fabric when the membrane formation direction during continuous membrane formation is 0° and a direction perpendicular to the membrane formation direction, that is, a width direction of the nonwoven fabric is 90°. Therefore, the closer the fiber orientation degree is to 0°, the fibers are more vertically oriented, and the closer the fiber orientation degree is to 90°, the fibers are more horizontally oriented.

A step of producing the composite semipermeable membrane and a step of producing an element include a heating step, but a phenomenon that the support membrane or the composite semipermeable membrane shrinks due to heating occurs. In particular, in the continuous membrane formation, since a tension is not applied in the width direction, the membrane is likely to shrink in the width direction. Since shrinkage of the support membrane or the composite semipermeable membrane causes a problem in dimensional stability or the like, a substrate having a small thermal dimensional change rate is desired.

In the substrate using a nonwoven fabric, a difference between the fiber orientation degree of the surface opposite to the surface in contact with the porous support layer and the fiber orientation degree of the surface on the porous support layer side is preferably 10° or more and 90° or less since a dimensional change in the width direction due to heat applied in the heating step or the like can be prevented.

An air permeability of the substrate is preferably 0.5 cc/cm$^2$/s or more. When the air permeability is within this range, the water permeation performance of the composite semipermeable membrane is improved. It is considered that this is because, when the polymer is cast on the substrate which is then immersed in a coagulation bath in a step of forming the support membrane, a non-solvent substituent rate from the substrate side is increased to change an internal structure of the porous support layer, which influences a retention amount and a diffusion rate of a monomer in a subsequent step of forming the separation functional layer.

Note that, the air permeability can be measured by using a Frazier tester based on JIS L1096 (2010). For example, the substrate is cut into a size of 200 mm × 200 mm to obtain a sample. This sample is attached to a Frazier tester, a suction fan and an air pore are adjusted such that a pressure of an inclined air pressure gauge is 125 Pa, and the amount of air passing through the substrate, that is, the air permeability, can be calculated based on the pressure indicated by a vertical air pressure gauge and the kind of the air pore used at this time. As the Frazier tester, for example, KES-F8-AP1 manufactured by KATO TECH CO., LTD. can be used.

A thickness of the substrate is preferably 10 $\mu$m or more and 200 $\mu$m or less, and more preferably 30 $\mu$m or more and 120 $\mu$m or less.

Examples of a material of the porous support layer include a polysulfone, a polyethersulfone, cellulose acetate, a polyvinyl chloride, and a mixture thereof. Among them, a polysulfone or a polyethersulfone having high chemical, mechanical, and thermal stability are particularly preferred.

A thickness of the porous support layer influences the strength of the obtained composite semipermeable membrane and a packing density when the composite semipermeable membrane is made into an element. In order to obtain sufficient mechanical strength and packing density, the thickness of the porous support layer is preferably 50 $\mu$m or more and 300 $\mu$m or less, and more preferably 100 $\mu$m or more and 250 $\mu$m or less.

The form of the porous support layer can be observed using a scanning electron microscope, a transmission electron microscope, an atomic force microscope, or the like. For example, in the case of observation using a scanning electron microscope, the porous support layer is peeled off from the substrate, and is cut in a direction perpendicular to the surface of the composite semipermeable membrane by using a freeze cleaving method to obtain a sample for cross section observation. The sample is thinly coated with, platinum, platinum-palladium, or ruthenium tetrachloride, preferably ruthenium tetrachloride, and observed using an ultra-high-resolution field emission scanning electron microscope (hereinafter, "UHR-FE-SEM") at an acceleration voltage of 3 kV to 15 kV. As the UHR-FE-SEM, for example, an S-900 type electron microscope manufactured by Hitachi, Ltd. or the like can be used.

For example, the support membrane may be selected from various commercially available materials such as "Millipore Filter VSWP" (product name) manufactured by Millipore Corporation and "Ultra Filter UK10" (product name) manufactured by TOYO ROSHI KAISHA, LTD., and may be produced according to a method described in "Office of Saline Water Research and Development Progress Report" No. 359 (1968).

The thickness of the substrate and a thickness of the composite semipermeable membrane can be measured using a digital thickness gauge. Note that, since the thickness of the separation functional layer is much thinner than that of the support membrane, the thickness of the composite semipermeable membrane can be regarded as the thickness of the support membrane. That is, the thickness of the composite semipermeable membrane can be measured using a digital thickness gauge and regarded as the thickness of the support membrane. In addition, the thickness of the porous support layer can be simply calculated by subtracting the thickness of the substrate from the thickness of the composite semipermeable membrane. As the digital thickness gauge, for example, PEACOCK manufactured by OZAKI MFG.CO.,LTD. can be used. In the case of using the digital thickness gauge, the thickness is measured at different 20 locations and an average value thereof is calculated.

Note that, in the case where it is difficult to measure the thickness of the substrate and the thickness of the composite semipermeable membrane using a thickness gauge, the thickness may be measured using a scanning electron microscope. In this case, the thickness is determined by measuring a thickness of one sample at arbitrary five locations on an electron microscope image of cross section observation and calculating an average value.

(1-2) Separation Functional Layer

Among components constituting the composite semipermeable membrane, the separation functional layer substantially has separation performance for a solute. As shown in FIG. 1, the separation functional layer 4 is disposed on one surface side of the porous support layer 3.

The separation functional layer contains a semi-aromatic crosslinked polyamide obtained by interfacial polycondensation of a polyfunctional aliphatic amine and a polyfunctional aromatic acid halide. A proportion of the semi-aromatic crosslinked polyamide in components of the separation functional layer is preferably 50 mass% or more, more preferably 80 mass% or more, and still more preferably 90 mass% or more, and the separation functional layer particularly preferably contains only the semi-aromatic crosslinked polyamide. When the separation functional layer contains 50 mass% or more of the semi-aromatic crosslinked polyamide, excessive densification due to $\pi$-$\pi$ interaction derived from an aromatic ring in the polyamide is prevented, and excellent monovalent ion permeability is easily obtained. Here, the "crosslinked polyamide" means a compound having three or more amide bonds, a branched structure, and a molecular weight of 400 or more.

The polyfunctional aliphatic amine is preferably an alicyclic diamine. Examples of the alicyclic diamine include a bipiperidine derivative and a piperazine derivative.

The alicyclic diamine preferably has a molecular weight of 90 or more and 160 or less.

The molecular weight of the alicyclic diamine is preferably 90 or more, more preferably 100 or more, and still more preferably 110 or more. When the molecular weight of the alicyclic diamine is 90 or more, a diffusion coefficient of the amine is reduced, and the polyamide is gradually formed during the interfacial polycondensation, so that it is possible to form pores that inhibit permeation of a polyvalent ion while preventing permeation resistance of a monovalent ion.

In addition, the molecular weight of the alicyclic diamine is preferably 160 or less, and more preferably 150 or less. In general, at an initial stage of the polycondensation, an oligomer is excessively generated on a first surface side in contact with the organic layer, and the pores on the first surface side are blocked, so that a pore diameter distribution in the thickness direction is likely to be non-uniform. When the molecular weight of the alicyclic diamine is 160 or less, the molecular weight of the generated oligomer can be reduced, and the interaction with the semi-aromatic crosslinked polyamide can be reduced, so that the oligomer can be easily removed in a liquid removal step and a post-treatment step immediately after the membrane is formed under a high humidity condition to be described later. Note that, when the molecular weight of the oligomer is reduced, a separation functional layer having a uniform pore diameter in the thickness direction, that is, a separation functional layer having an average pore diameter R1 and an average pore diameter R2 satisfying $0.90 \leq R1/R2 \leq 1.10$, to be described later, is easily formed, and a membrane having a high monovalent ion permeability is obtained.

Examples of the alicyclic diamine having a molecular weight of 90 or more and 160 or less include substituted piperazines in which a piperazine ring is substituted with an alkyl group having 1 to 3 carbon atoms (for example, 2-methylpiperazine, 2-ethylpiperazine, 2-normalpropylpiperazine, 2,2-dimethylpiperazine, 2,2-diethylpiperazine, 2,3-dimethylpiperazine, 2,3-diethylpiperazine, 2,5-dimethylpiperazine, 2,5-diethylpiperazine, 2,6-dimethylpiperazine, 2,6-diethylpiperazine, and 2,3,5,6-tetramethylpiperazine), and homopiperazine.

The "polyfunctional aromatic acid halide" means an aromatic acid halide having two or more halogenated carbonyl groups in one molecule, and is not particularly limited as long as it gives a semi-aromatic crosslinked polyamide by a reaction with the polyfunctional aliphatic amine. Examples of the polyfunctional aromatic acid halide include halides such as 1,3,5-benzenetricarboxylic acid, 1,2,4-benzenetricarboxylic acid, 1,3-benzenedicarboxylic acid, 1,4-benzenedicarboxylic acid, 1,3,5-benzenetrisulfonic acid, and 1,3,6-naphthalenetrisulfonic acid. Among the polyfunctional aromatic acid halides, an acid chloride is preferred, and in terms of economic efficiency, availability, ease of handling, ease of reactivity, and the like, trimesoyl chloride (hereinafter, "TMC") which is an acid halide of 1,3,5-benzenetricarboxylic acid, isophthalic acid chloride which is an acid halide of 1,3-benzenedicarboxylic acid, terephthalic acid chloride which is an acid halide of 1,4-benzenedicarboxylic acid, 1,3,5-benzenetrisulfonic acid chloride which is an acid halide of 1,3,5-benzenetrisulfonic acid, and 1,3,6-naphthalenetrisulfonic acid chloride which is an acid halide of 1,3,6-naphthalenetrisulfonic acid are particularly preferred. The polyfunctional aromatic acid halide may be used alone or as a mixture of two or more kinds thereof. By mixing any one of bifunctional isophthalic acid chloride and terephthalic acid chloride with trifunctional TMC, 1,3,5-benzenetrisulfonic acid chloride, and 1,3,6-naphthalenetrisulfonic acid chloride, a molecular gap of a polyamide crosslinked structure is expanded, and a membrane having a uniform pore diameter distribution can be controlled in a wide range. A mixing molar ratio of the trifunctional acid chloride and the bifunctional acid chloride is preferably 1:20 to 50:1, and more preferably 1:1 to 20:1.

The thickness of the separation functional layer is preferably 15 nm or more and 50 nm or less, and more preferably 20 nm or more and 40 nm or less. When the thickness of the separation functional layer is 15 nm or more, a composite semipermeable membrane having sufficient water permeability can be easily obtained, and when the thickness of the separation functional layer is 20 nm or more, a composite semipermeable membrane having sufficient water permeability can be stably obtained without causing a decrease in removability due to the occurrence of defects. On the other hand, the thickness of the separation functional layer is preferably 50 nm or less, and more preferably 40 nm or less. When the thickness of the separation functional layer is 50 nm or less, stable membrane performance can be obtained, and when the thickness of the separation functional layer is 40 nm or less, more sufficient water permeability can be obtained.

The thickness of the separation functional layer can be analyzed using an observation method such as a transmission electron microscope, TEM tomography, or a focused ion beam/scanning electron microscope (FIB/SEM).

As a result of intensive studies, the inventors of the present invention have found that a composite semipermeable membrane satisfying the following requirements exhibits excellent monovalent ion/polyvalent ion selective separation performance under an acidic condition.

When the composite semipermeable membrane according to the present embodiment is irradiated with a positron beam from the first surface side, the average pore diameter R1 and the average pore diameter R2 of the separation functional layer derived from a positron annihilation lifetime measurement method are each 0.30 nm or more and 2.00 nm or less, and $0.90 \leq R1/R2 \leq 1.10$ is satisfied.

Here, R1 and R2 are defined as follows.

R1: average pore diameter under condition of positron beam intensity of 0.1 keV
R2: average pore diameter under condition of positron beam intensity of 0.5 keV

The "positron annihilation lifetime measurement method" is a method of measuring a time (on the order of several hundreds of picoseconds to several tens of nanoseconds) from a time when a positron is incident on a sample to a time when the positron is annihilated, and non-destructively evaluating information such as a size of pores of 0.1 nm to 10 nm, a number density thereof, and a distribution of the size based on the annihilation lifetime.

Note that, a measurement range in a depth direction from the sample surface can be adjusted based on an amount of energy of the positron beam incident on the sample. As the energy increases, a deeper portion from the sample surface is included in the measurement region, and the depth depends on the density of the sample. For example, in measurement for the separation functional layer of the composite semipermeable membrane, when a positron beam having an energy of about 0.1 keV is emitted from the first surface side of the composite semipermeable membrane, a region at a depth of 0 nm to 5 nm from the sample surface is generally measured, and when a positron beam having an energy of about 0.5 keV is emitted, a region at a depth of 0 nm to 50 nm from the sample surface is generally measured. Note that, in the present embodiment, in the case of providing another layer such as a protective layer on the separation functional layer, the average pore diameter R1 and the average pore diameter R2 of the separation functional layer can be measured by removing the another layer such as a protective layer in advance.

As described above, a weaker positron beam intensity reflects the pore diameter on the first surface side, whereas a stronger positron beam intensity reflects the pore diameter on the second surface side. The closer R1/R2 is to 1, the more uniform the pore diameter is in the thickness direction. In the present embodiment, when $0.90 \leq R1/R2 \leq 1.10$ is satisfied, excellent monovalent ion/polyvalent ion selective separation performance can be realized.

Although the above mechanism has not been elucidated in detail, it is presumed that a direction in which ions diffuse in the separation functional layer is uniform due to the uniform pore diameter in the thickness direction, and the permeation resistance of the monovalent ion having a size capable of freely moving in the separation functional layer is prevented. As a result, it is considered that excellent monovalent ion/polyvalent ion selective separation performance is realized. Therefore, the average pore diameters R1 and R2 of the separation functional layer more preferably satisfy $0.95 \leq R1/R2 \leq 1.05$, and still more preferably satisfy $0.97 \leq R1/R2 \leq 1.03$.

The average pore diameters R1 and R2 of the separation functional layer in the composite semipermeable membrane according to the present embodiment are each 0.30 nm or more and 2.00 nm or less. When the average pore diameters R1 and R2 are within the above range, a substantial function as a nanofiltration membrane is exhibited. R1 is preferably 0.55 nm or more and 1.00 nm or less, more preferably 0.55 nm or more and 0.80 nm or less, more preferably 0.55 nm or more and 0.70 nm or less, still more preferably 0.57 nm or more and 0.68 nm or less, and particularly preferably 0.60 nm or more and 0.65 nm or less. When R1 is within the above range, the effect of inhibiting the permeation of the polyvalent ion while preventing the permeation resistance of the monovalent ions is remarkable. R2 is preferably 0.50 nm or more and 1.10 nm or less, more preferably 0.50 nm or more and 0.80 nm or less, more preferably 0.50 nm or more and 0.77 nm or less, still more preferably 0.55 nm or more and 0.70 nm or less, and particularly preferably 0.60 nm or more and 0.65 nm or less, from the viewpoint of exhibiting the function as a nanofiltration membrane.

The average pore diameters R1 and R2 can be controlled by, for example, performing interfacial polycondensation under a high humidity condition, and can be controlled based on the molecular weight of the polyfunctional aliphatic amine used for the interfacial polycondensation, a temperature at which an organic solvent solution containing a polyfunctional aromatic acid halide is applied during the interfacial polycondensation, and the like. Specifically, in the case where the polyfunctional aliphatic amine is an alicyclic diamine having a molecular weight of 90 or more and 160 or less, it is easy to remove the oligomer in the liquid removal step and the post-treatment step immediately after membrane formation under a high humidity condition to be described later, and R1/R2 can be controlled within a particularly preferred range.

In the composite semipermeable membrane according to the present embodiment, in a cross section of the separation functional layer perpendicular to a surface of the composite semipermeable membrane, a total number P1 of pores having a pore diameter of 0.30 nm or more and 1.20 nm or less, a total number P2 of pores having a pore diameter of 0.50 nm or more and less than 0.80 nm, a total number P3 of pores having a pore diameter of 0.80 nm or more and 1.20 nm or less, and a total number P4 of pores having a pore diameter of more than 1.20 nm preferably satisfy $0.20 < P2/P1 < 0.40$, $P3/P2 < 0.20$, and $P4/P1 \leq 0.01$.

Here, pores having a pore diameter of 0.30 nm or more and less than 0.50 nm are pores through which only water passes, pores having a pore diameter of 0.50 nm or more and 0.80 nm or less are effective pores through which only water and the monovalent ion pass, pores having a pore diameter of 0.80 nm or more and 1.20 nm or less are coarse pores through which water, the monovalent ion, and the polyvalent ion pass, and pores having a pore diameter of more than 1.20 nm are coarse pores through which the polyvalent ion passes. That is, P2/P1 means a ratio of effective pores through which only water and the monovalent ion pass to the total number of pores having a pore diameter of 0.30 nm or more and 1.20 nm or less, P3/P2 means a ratio of coarse pores through which the polyvalent ion and water pass to effective pores through which only water and the monovalent ion pass, and P4/P1 means a ratio of coarse pores through which the polyvalent ion easily permeates to the total number of pores having a pore diameter of 0.30 nm or more and 1.20 nm or less.

In the case where the composite semipermeable membrane satisfies $0.20 < P2/P1 < 0.40$ and $P3/P2 < 0.20$ in the cross section of the separation functional layer perpendicular to the surface of the composite semipermeable membrane, an existence ratio of effective pores having a pore diameter of 0.50 nm or more and 0.80 nm or less through which only water and a monovalent ion pass to pores having a pore diameter of 0.30 nm or more and less than 0.50 nm through which only water passes and to coarse pores having a pore diameter of 0.80 nm or more and 1.20 nm or less through which water and a polyvalent ion pass is large, the effect of inhibiting the permeation of the polyvalent ion while preventing the permeation resistance of the monovalent ion is remarkable, and excellent monovalent ion/polyvalent ion selective separation performance is obtained under an acidic condition. P1 and P2 more preferably satisfy $0.26 \leq P2/P1 \leq 0.35$, and still more preferably satisfy $0.31 \leq P2/P1 \leq 0.35$. When P1 and P2 satisfy the above range, excellent permeability of the monovalent ion is easily exhibited. In addition, P2 and P3 preferably satisfy $P3/P2 \leq 0.12$, more preferably satisfy $P3/P2 \leq 0.09$, and still more preferably satisfy $P3/P2 \leq 0.05$. When P2 and P3 satisfy the above range, the effect of inhibiting the permeation of the polyvalent ions is more remarkable.

Further, in the case of $P4/P1 \leq 0.01$, more excellent monovalent ion/polyvalent ion selective separability is exhibited. In the case of $P4/P1 > 0.01$, there are many coarse pores through which the polyvalent ion easily permeates, and the monovalent ion/polyvalent ion selective separability decreases. Therefore, P4/P1 is more preferably $P4/P1 \leq 0.007$, and still more preferably $P4/P1 \leq 0.005$, and it is particularly preferable that P4 is not present.

P1, P2, P3, and P4 can be controlled by, for example, controlling the molecular weight of the polyfunctional aliphatic amine used for the interfacial polycondensation, the temperature at which the organic solvent solution containing a polyfunctional aromatic acid halide is applied during the interfacial polycondensation, and a hydrophilic solvent treatment. Specifically, in the case where the polyfunctional aliphatic amine is an alicyclic diamine having a molecular weight of 100 or more and 160 or less, it is easy to remove the oligomer in the liquid removal step and the post-treatment step immediately after membrane formation under a high humidity condition to be described later, and P2/P1 can be controlled within a particularly preferred range.

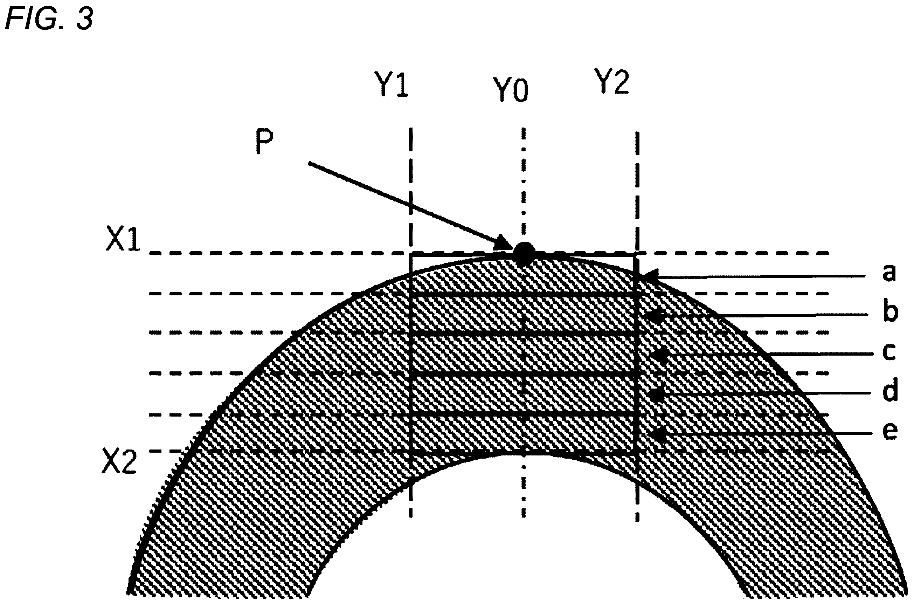

As shown in FIG. 3, in a cross section of the separation functional layer in the composite semipermeable membrane according to the present embodiment, which is perpendicular to the surface of the composite semipermeable membrane (a cross section perpendicular to the first surface), when regions obtained by dividing the separation functional layer into five regions at an equal interval from the first surface side toward the second surface side are defined as regions a to e, an amino group density Nb in the region b and an amino group density Nd in the region d preferably satisfy Nb/Nd $\leq$ 0.80.

The separation functional layer, which is mainly composed of a semi-aromatic crosslinked polyamide formed by interfacial polycondensation, has an amino group and a carboxy group as terminal functional groups. In particular, a separation functional layer having a high amino group density has a sparse structure under an acidic condition, and monovalent ion permeability is improved, but an inhibition property for a polyvalent ion having a large size decreases. In addition, in a separation functional layer having a low amino group density, the separation functional layer has a dense structure under an acidic condition, and the monovalent ion permeability decreases, but the polyvalent ion inhibition property is improved. In this way, there is a trade-off relationship between the monovalent ion permeability and the polyvalent ion inhibition property, and by forming the separation functional layer in which the amino group density is uniformly distributed, performance in which the monovalent ion permeability and the polyvalent ion inhibition property are balanced is obtained.

In the separation functional layer in the composite semipermeable membrane according to the present embodiment, in the case where the amino group density Nb in the region b and the amino group density Nd in the region d satisfy Nb/Nd $\leq$ 0.80, that is, in the case of a separation functional layer containing a semi-aromatic crosslinked polyamide in which the amino group density has the above density difference in a thickness direction of the separation functional layer, a composite semipermeable membrane having more excellent monovalent ion permeability and polyvalent ion inhibition performance is obtained. The amino group density Nb and the amino group density Nd more preferably satisfy Nb/Nd $\leq$ 0.70, still more preferably satisfy Nb/Nd $\leq$ 0.65, and particularly preferably satisfy Nb/Nd $\leq$ 0.60, from the viewpoint of achieving both the monovalent ion permeability and the polyvalent ion inhibition performance. In addition, the amino group density Nb and the amino group density Nd preferably satisfy Nb/Nd $\geq$ 0.10, from the viewpoint of preventing a change in polyamide structure due to an excessive difference in density of amino groups and a remarkable performance fluctuation associated therewith. In order to control the amino group distribution within the above range, it is necessary to control an atmosphere humidity to 80% or more, more preferably 90% or more, and still more preferably 95% or more. This is because it is possible to efficiently remove the oligomer in the liquid removal step or a solvent treatment step by preventing evaporation of moisture in the formed polyamide and preventing insolubilization due to intermolecular hydrogen bonding of the oligomer having a large amount of amino groups generated in excess. In addition, by a method of forming the separation functional layer by applying an aqueous solution containing a polyfunctional aliphatic amine to the surface of the porous support layer, the terminal amino group density on the first surface side can be reduced as compared with the amino group density on the second surface side.

In the separation functional layer in the composite semipermeable membrane according to the present embodiment, the amino group density Nb in the region b is preferably $1.0 \times 10^{-23}$ mol/nm$^2$ or less. When Nb is $1.0 \times 10^{-23}$ mol/nm$^2$ or less, excellent monovalent ion permeability can be realized. Nb is more preferably $0.9 \times 10^{-13}$ mol/nm$^2$ or less, and still more preferably $0.8 \times 10^{-23}$ mol/nm$^2$ or less. In addition, Nb is preferably $0.1 \times 10^{-23}$ mol/nm$^2$ or more, from the viewpoint of preventing a decrease in water permeability due to hydrophobization of the polyamide forming the separation functional layer. The amino group density Nb can be controlled to be low by increasing a concentration of the polyfunctional acid halide during interfacial polymerization. However, in the case where a monomer balance during the interfacial polymerization is lost due to an increase in concentration of the polyfunctional acid halide, a degree of polymerization does not increase, so that a large number of coarse pores are easily formed, and polyvalent ion removability decreases. In addition, although the amino group density Nb can be reduced by reacting the amino group on the first surface side of the separation functional layer with an acid anhydride after the interfacial polymerization, it is not preferred since the monovalent ion permeability and the water permeability decrease. Therefore, in order to control the amino group distribution Nb within the above range, as described above, it is necessary to control the atmosphere humidity to 80% or more, more preferably 90% or more, and still more preferably 95% or more. In addition, the amino group distribution Nb can be further reduced by performing in combination a treatment step using a hydrophilic solvent to be described later.

The regions a to e obtained by dividing the separation functional layer into five regions at an equal interval are determined by using the following method.

The composite semipermeable membrane is immersed in a tungstic acid aqueous solution a plurality of times. In the composite semipermeable membrane, a cross section of the separation functional layer perpendicular to the thickness direction of the separation functional layer is photographed at a magnification of 100,000 using a field emission scanning transmission electron microscope (hereinafter, "STEM"). In the obtained image, as shown in FIG. 3, a reference point P is provided at any position on an outer surface (a surface on a side opposite to the surface on the porous support layer side) of the separation functional layer, and straight lines Y1 and Y2 parallel to a normal line passing through the reference point P are drawn at any interval of 3 nm to 10 nm on both sides in a direction orthogonal to a normal line Y0 with the normal line Y0 as a center.

In addition, a tangent line X1 of the outer surface of the separation functional layer passing through the reference point P and a tangent line X2 of an inner surface (a surface on the porous support layer side) of the separation functional layer parallel thereto are drawn. Four straight lines are drawn between X1 and X2 for division into five regions at an equal interval. The regions surrounded by Y1 and Y2 and surrounded by X1, X2 and the four straight lines therebetween are referred to as the regions a to e in the order from the outer surface of the separation functional layer.

Note that, in the case where the separation functional layer forms a plurality of pleated structures, a cross-sectional image is captured by the same method as described above, and Y1 and Y2 are drawn by the same procedure in any region included in 50% to 100% of a height from the surface of the separation functional layer on the second surface side (the surface of the support membrane) to an apex of a convex portion with reference to a pleat having the highest pleat height among the pleated structures in the obtained image. Next, the regions a to e are determined by the same procedure as described above. Note that, an area of each of the regions a to e is 5 nm$^2$ or more and 30 nm$^2$ or less.

The amino group density in each of the regions a to e obtained by dividing the separation functional layer into five regions at an equal interval is determined by using the following method.

A luminance is measured using STEM for each region surrounded by X1 and X2 or the four straight lines therebetween and surrounded by Y1 and Y2 (each region including the regions a to e). A minimum luminance Lmin and a maximum luminance Lmax are determined for each region. For the obtained minimum luminance Lmin and maximum luminance Lmax, areas of portions showing a luminance of {Lmin+(Lmax-Lmin)/3} or more are integrated for each region. This integrated value corresponds to an area (nm$^2$) of a portion having tungsten (W) labeled amino groups. The amino group density (mol/nm$^2$) can be calculated by dividing the obtained integrated value by an area (0.04 nm$^2$) per amino group molecule, an Avogadro constant (6.0 × 10$^{23}$/mol), and the area of each region. The average value of the amino group density obtained for each region of five randomly selected pleated structures is taken as the amino group density of each region.

In the composite semipermeable membrane according to the present embodiment, a monovalent ion removal rate is preferably 75% or less, more preferably 60% or less, and still more preferably 50% or less. When the monovalent ion removal rate is within the above range, a monovalent ion concentration in permeated water is increased, and a step of concentrating the monovalent ion in a process of purifying the monovalent ion can be made efficient or omitted, which contributes to shortening of a purification time and a reduction of a purification cost. A polyvalent ion removal rate is preferably 99.4% or more, more preferably 99.6% or more, and still more preferably 99.8% or more. When the polyvalent ion removability is within the above range, a polyvalent ion concentration in the permeated water is reduced, and the step of purifying the monovalent ion can be made efficient or omitted. In addition, since the polyvalent ion concentration in non-permeated water is increased, the polyvalent ion can be efficiently purified.

The following "monovalent ion/polyvalent ion selectivity" means a value calculated according to the following equation based on the monovalent ion removal rate and the polyvalent ion removal rate calculated based on an ion concentration contained in the permeated water obtained when an aqueous solution containing a monovalent ion and a polyvalent ion is used as feed water and a membrane filtration treatment is performed on a separation membrane. Note that, in the present description, the ion used for calculating the monovalent ion/polyvalent ion selectivity means a cation.

Monovalent ion/polyvalent ion selectivity = (100 - monovalent ion removal rate)/(100 - polyvalent ion removal rate)

The monovalent ion/polyvalent ion selectivity is preferably 70 or more, more preferably 80 or more, and still more preferably 100 or more. When the monovalent ion/polyvalent ion selectivity is within the above range, purification efficiency for both the monovalent ion and the polyvalent ion is improved, which contributes to the shortening of the purification time and the reduction of the purification cost.

The separation functional layer in the composite semipermeable membrane according to the present embodiment preferably has a hollow pleated structure. In the case where the separation functional layer in the composite semipermeable membrane has a hollow pleated structure, the apparent pore number per unit membrane area is increased. As a result, a pressure required for treating a solution using the composite semipermeable membrane can be reduced, and exhaust heat and an amount of electricity of an operation device can be reduced.

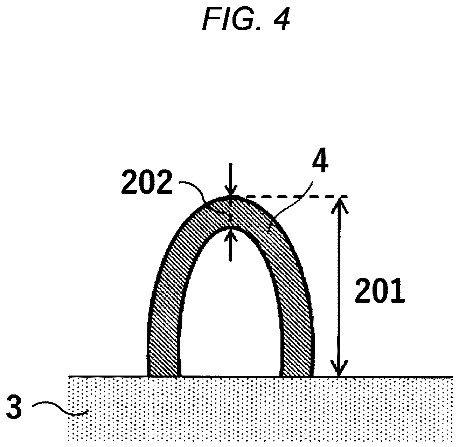

In an image of the pleated structure of the separation functional layer obtained by observing a cross section of the separation functional layer perpendicular to the surface of the composite semipermeable membrane using a transmission electron microscope (TEM), with respect to the separation functional layer 4 on the porous support layer 3 shown in FIG. 4, a pleat height 201 and a thickness 202 of the separation functional layer are measured, and a ratio of the pleat height to the thickness of the separation functional layer (pleat height/thickness of separation functional layer) is determined. When the ratio of the pleat height of the separation functional layer to the thickness of the separation functional layer is 1.2 or more, it is determined that the separation functional layer has a pleated structure, and when the ratio is less than 1.2, it is determined that the separation functional layer does not have pleats.

The "thickness of the separation functional layer" means a length of a line segment connecting two points on a feed water side and a permeated water side of the separation functional layer at the shortest in the cross-sectional image of the separation functional layer, and corresponds to a length indicated by the thickness 202 of the separation functional layer in FIG. 4. The measurement point on the feed water side is a point farthest from the support membrane in each section obtained by dividing the cross-sectional image of the separation functional layer into 10 sections. In the case where the separation functional layer forms a pleated structure and the pleated structure is formed across the section, a section farther from the support membrane is set as a measurement point.

The "pleat height" is a length of a line segment connecting two intersection points of a perpendicular line drawn from a point on the feed water side to the surface of the support membrane and the surface of the support membrane when the thickness of the separation functional layer is measured, and corresponds to a length indicated by the pleat height 201 in FIG. 4. The pleat height is obtained by measuring randomly selected 100 pleats in an image obtained by observing a cross section of the separation functional layer perpendicular to the surface of the composite semipermeable membrane using a transmission electron microscope (TEM), and calculating an average value.

The pleat height is preferably 20 nm or more and 500 nm or less, and more preferably 50 nm or more and 300 nm or less, from the viewpoint of water permeability. When the pleat height is 20 nm or more, the specific surface area of the separation functional layer can be sufficiently increased, and high water permeability can be obtained at a low pressure. In addition, when the pleat height is 500 nm or less, clogging of a water flow channel due to overlapping of adjacent pleats and concentration polarization on the membrane surface can be prevented, and thus high water permeability can be obtained at a low pressure. The pleat height can be controlled based on fat solubility and a molecular weight of a polyfunctional amine and the temperature during the interfacial polymerization.

In order to form a separation functional layer having a hollow pleated structure, logP of the polyfunctional aliphatic amine used for the interfacial polycondensation is preferably -0.5 or more and 2.0 or less, and more preferably -0.5 or more and 1.5 or less.

The "logP" means a value obtained by calculating an octanol-water partition coefficient of a compound in Non Patent Literature 1 based on an octanol-water partition coefficient of each functional group contained in the compound, and is a value calculated by Chem Draw, which is structural formula drawing software, in the present description.

It has been known for a long time that interfacial polymerization of a polyamide proceeds by distributing and diffusing an amine in an organic phase and reacting with a polyfunctional acid halide in the organic phase (Non Patent Literature 2). When logP is -0.5 or more and 2.0 or less, the distribution and diffusion of a polyfunctional aliphatic amine in an organic solvent during the interfacial polycondensation are optimized, and a separation functional layer having a hollow pleated structure is easily formed.

Examples of the polyfunctional aliphatic amine having logP of -0.5 or more and 2.0 or less include substituted piperazines in which a piperazine ring is substituted with an alkyl group having 1 to 4 carbon atoms in total (for example, 2-methylpiperazine, 2-ethylpiperazine, 2-normalpropylpiperazine, 2,2-dimethylpiperazine, 2,2-diethylpiperazine, 2,3-dimethylpiperazine, 2,3-diethylpiperazine, 2,5-dimethylpiperazine, 2,5-diethylpiperazine, 2,6-dimethylpiperazine, 2,6-diethylpiperazine, 2-ethyl-3-methylpiperazine, 2-ethyl-5-methylpiperazine, 2-ethyl-6-methylpiperazine, 2-methyl-3-propylpiperazine, 2-methyl-5-propylpiperazine, 2-methyl-6-propylpiperazine, 2,5-diethylpiperazine, and 2,3,5,6-tetramethylpiperazine), and bipiperidine derivatives (for example, 2,2'-bipiperidine, 3,3'-bipiperidine, and 4,4'-bipiperidine).

The composite semipermeable membrane according to the present embodiment is suitable for separating a non-ionic solute as well as an ionic solute such as lithium, and is characterized by a permeability ratio of the respective solutes. Examples of the non-ionic solute include glucose and sucrose. In the case where a glucose permeability when 1000 ppm of a glucose aqueous solution having a temperature of 25°C and a pH of 6.5 is permeated at an operation pressure of 0.5 MPa is defined as B, and a sucrose permeability when 1000 ppm of a sucrose aqueous solution having a temperature of 25°C and a pH of 6.5 is permeated at an operation pressure of 0.5 MPa is defined as C, B/C is preferably 10 or more, more preferably 30 or more, and still more preferably 50 or more. The upper limit of B/C is not particularly limited, and is, for example, 1000 or less. Here, the permeability of each solute is represented by $100 \times$ (solute concentration in permeated water/solute concentration in feed water). A high B/C ratio contributes to, for example, shortening of a separation and purification time of monosaccharides and polysaccharides and a reduction of a purification cost in sugar purification.

2. Method for Producing Composite Semipermeable Membrane

Next, a method for producing the composite semipermeable membrane is described. The method for producing the composite semipermeable membrane includes a support membrane formation step and a separation functional layer formation step.

(2-1) Support Membrane Formation Step

The support membrane formation step can also be referred to as a porous support layer formation step. This step includes, for example, a step of applying a polymer solution to a substrate and a step of immersing the substrate to which the polymer solution has been applied in a coagulation bath to coagulate the polymer.

EP 4 628 199 A1

In the step of applying the polymer solution to the substrate, the polymer solution is, for example, prepared by dissolving the polymer, which is a component of the porous support layer, in a good solvent for the polymer.

A temperature of the polymer solution during the application of the polymer solution is preferably 10°C or higher and 60°C or lower in the case where a polysulfone is used as the polymer. When the temperature of the polymer solution is within this range, the polymer solution is sufficiently impregnated between fibers of the substrate without the polymer being precipitated, and then solidified. As a result, a porous support layer that is firmly bonded to the substrate due to an anchor effect can be obtained. Note that, a preferred temperature range of the polymer solution can be appropriately adjusted according to the kind of the used polymer, a desired solution viscosity, and the like.

As a solvent for the polymer solution, N,N-dimethylformamide (hereinafter, "DMF") is preferred.

After the polymer solution is applied onto the substrate, a time until the substrate is immersed in the coagulation bath is preferably 0.1 seconds or longer and 5 seconds or shorter. When the time until the immersion in the coagulation bath is within this range, the polymer solution is sufficiently impregnated between the fibers of the substrate and then solidified. Note that, a preferred range of the time until the immersion in the coagulation bath can be appropriately adjusted according to the kind of the used polymer solution, a desired solution viscosity, and the like.

As the coagulation bath, water is generally used, and any one that does not dissolve the polymer, which is a component of the porous support layer, may be used. A temperature of the coagulation bath is preferably -20°C or higher and 100°C or lower, and more preferably 10°C or higher and 50°C or lower. When the temperature of the coagulation bath is 100°C or lower, a vibration of a coagulation bath surface due to thermal motion can be prevented, and smoothness of the membrane surface after membrane formation can be maintained. In addition, when the temperature is -20°C or higher, a solidification rate can be maintained, so that the membrane forming property can be improved.

Next, the support membrane thus obtained may be washed with hot water to remove the solvent remaining in the membrane. A temperature of the hot water at this time is preferably 40°C or higher and 100°C or lower, and more preferably 60°C or higher and 95°C or lower. When the washing temperature is 100°C or lower, a degree of shrinkage of the support membrane is not too large, and a decrease in water permeation performance can be prevented. In addition, when the washing temperature is 40°C or higher, a high washing effect can be obtained.

(2-2) Separation Functional Layer Formation Step

Next, an example of a step of forming a separation functional layer constituting the composite semipermeable membrane is described. In the separation functional layer formation step, an aqueous solution containing a polyfunctional aliphatic amine compound and an organic solvent solution containing a polyfunctional aromatic acid halide are used to form a semi-aromatic crosslinked polyamide on the surface of the support membrane by interfacial polycondensation.

Specifically, the step of forming the separation functional layer includes

 (a) a step of coating the surface of the porous support layer with a polyfunctional aliphatic amine aqueous solution, and
 (b) a step of bringing the porous support layer into contact with a polyfunctional aromatic acid halide-containing solution at 10°C or higher and 38°C or lower after the above (a).

A concentration of the polyfunctional aliphatic amine in the aqueous solution containing the polyfunctional aliphatic amine compound is preferably 0.1 mass% or more and 10 mass% or less.

The aqueous solution containing the polyfunctional aliphatic amine may contain an alcohol. Examples of the alcohol include ethanol, 1-propanol, 2-propanol, and butanol. When an alcohol is contained in the aqueous solution containing the polyfunctional aliphatic amine, an effect same as that of a surfactant described above can be obtained.

The aqueous solution containing the polyfunctional aliphatic amine may contain an alkaline compound. Examples of the alkaline compound include sodium hydroxide, trisodium phosphate, and triethylamine. When an alkaline compound is contained, hydrogen halide generated in the interfacial polycondensation reaction is removed, and a decrease in reactivity of the polyfunctional aliphatic amine can be prevented, so that a polyamide formation reaction is promoted, and the selective separability and durability to an acid and an alkali can be improved.

A solvent in the polyfunctional aromatic acid halide-containing solution is an organic solvent. As the organic solvent, it is preferable to use an organic solvent which is immiscible with water, which does not break the support membrane, which does not inhibit a reaction of forming the semi-aromatic crosslinked polyamide, which has a solubility parameter (hereinafter, an "SP value") of 15.2 $(MPa)^{1/2}$ or more, and which has logP of 3.2 or more. When the SP value is 15.2 $(MPa)^{1/2}$ or more and logP is 3.2 or more, the distribution and diffusion of the polyfunctional aliphatic amine during the interfacial polycondensation are optimized, and an amount of functional groups can be increased.

As the organic solvent having an SP value of 15.2 $(MPa)^{1/2}$ or more and logP of 3.2 or more, for example, octane, nonane, decane, undecane, dodecane, tridecane, tetradecane, heptadecane, hexadecane, cyclooctane, ethylcyclohexane, 1-octene, and 1-decene alone, or a mixture thereof is preferably used.

The aqueous solution containing the polyfunctional aliphatic amine compound may contain a surfactant.

Examples of the surfactant include sodium dodecyl benzenesulfonate, sodium dodecyl sulfate, sodium dodecyl diphenyl ether disulfonate, styrene bis(sodium naphthalene sulfonate), and sodium polyoxyethylene alkyl ether sulfate. When a surfactant is contained, the surface of the porous support layer can be uniformly coated with the aqueous solution, so that the separation functional layer is uniformly formed, and an effect of stabilizing the membrane performance and an effect of improving adhesiveness between the separation functional layer and the porous support layer are obtained.

The aqueous solution containing the polyfunctional aliphatic amine compound and the organic solvent solution containing the polyfunctional aromatic acid halide may each contain a compound such as an acylation catalyst, a polar solvent, an acid scavenger, or an antioxidant, if necessary.

In order to perform the interfacial polycondensation of the polyfunctional aliphatic amine and the polyfunctional aromatic acid halide on the porous support layer, first, the surface of the porous support layer is coated with the aqueous solution containing the polyfunctional aliphatic amine to form a coating layer. A method of coating the surface of the porous support layer with the above aqueous solution containing the polyfunctional aliphatic amine may be any method that uniformly and continuously coats the surface of the porous support layer with the aqueous solution, and examples thereof include a method of applying the aqueous solution to the surface of the porous support layer and a method of immersing the support membrane in the aqueous solution. Among them, a method of applying the aqueous solution to the surface of the porous support layer is preferred. By applying the aqueous solution containing the polyfunctional aliphatic amine to the surface of the porous support layer, the amount of moisture contained in the porous support layer is reduced, that is, the amount of amine contained in the support membrane is reduced as compared with the method of immersion. Therefore, in the initial stage of the interfacial polycondensation after the application of the polyfunctional aromatic acid halide, excessive supply of amine to a reaction field can be prevented, which contributes to the formation of pores that inhibit the permeation of the polyvalent ion while preventing the permeation resistance of the monovalent ion, and at the same time, the terminal amino group density on the first surface side can be reduced as compared with the amino group density on the second surface side in the formed separation functional layer.

Next, it is preferable to remove the excessively applied aqueous solution by the liquid removal step. A liquid removal method may be, for example, a method of holding the membrane surface in a vertical direction and allowing the liquid to naturally flow down. After the liquid removal, the membrane surface may be dried to remove all or a part of water of the aqueous solution on the membrane surface.

Thereafter, the above organic solvent solution containing the polyfunctional aromatic acid halide is applied to the porous support layer containing the above aqueous solution containing the polyfunctional aliphatic amine. An application temperature is preferably 10°C or higher and 38°C or lower, and more preferably 20°C or higher and 35°C or lower. When the application temperature is 10°C or higher, a diffusion rate of the amine to the organic solvent is sufficient, and a polyamide having a pore diameter necessary for the polyvalent ion selective removability is easily formed. In addition, when the application temperature is 38°C or lower, inhibition of diffusion due to an increase in reaction rate is prevented, so that the pore structure is uniform and the selective separability is improved.

In the case where trimesoyl chloride is contained as the polyfunctional aromatic acid halide, a concentration of trimesoyl chloride in the organic solvent solution is preferably 0.05 mass% or more and 0.7 mass% or less, and more preferably 0.08 mass% or more and 0.3 mass% or less. When the concentration of trimesoyl chloride is within this range, sufficient water permeation performance, selective separation performance, and durability against an acid can be obtained. When other trifunctional acid chlorides or bifunctional acid chlorides are used, a molar concentration of the acid chloride is adjusted to be substantially the same in accordance with a molecular weight ratio of the trimesoyl chloride described above.

By bringing the polyfunctional aliphatic amine and the polyfunctional aromatic acid halide into contact with each other in this manner, the interfacial polycondensation therebetween is carried out. The interfacial polycondensation is preferably carried out under a temperature condition of 10°C or higher, more preferably carried out under a temperature condition of 80°C or higher, and still more preferably carried out at a temperature equal to or higher than the melting point of the polyfunctional aliphatic amine. The interfacial polycondensation is preferably carried out under a temperature condition of 120°C or lower. When the interfacial polycondensation is carried out at 10°C or higher, a decrease in mobility of the oligomer can be prevented in the interfacial polycondensation reaction, the polyfunctional aliphatic amine can maintain high mobility in the reaction system, an efficient crosslinking reaction proceeds, and excellent polyvalent ion selective removability can be achieved. In addition, when the interfacial polycondensation is carried out at 120°C or lower, excessive drying of the porous support layer can be prevented, and practical water permeability can be ensured.

As a result of intensive studies, the inventors of the present invention have found that the composite semipermeable membrane according to the present embodiment can be easily obtained by controlling the atmosphere humidity (relative humidity) during the interfacial polycondensation to 80% or more. When the atmosphere humidity during the interfacial polycondensation is 80% or more, evaporation of moisture in the formed polyamide can be prevented, and insolubilization due to intermolecular hydrogen bonding of the oligomer having a large amount of amino groups generated in excess can be prevented. Accordingly, the oligomer can be efficiently removed in the liquid removal step or the solvent treatment step to be described later. Therefore, it is considered that it is possible to prevent expansion of the pore diameter due to swelling of the semi-aromatic crosslinked polyamide during a membrane operation under an acidic condition, to reduce the amino group density on the first surface side of the separation functional layer, to increase an inclination of the amino group density in the thickness direction, to prevent swelling of the polyamide on the first surface side with which an acid having a high concentration comes into contact and the resulting excessive expansion of the pore diameter during a membrane operation under an acidic condition, and to achieve both excellent monovalent ion permeability and excellent polyvalent ion removability. Therefore, the atmosphere humidity during the interfacial polycondensation is preferably 80% or more, more preferably 90% or more, and still more preferably 95% or more. Note that, the atmosphere humidity can be adjusted by using a precision air conditioner or the like.

A time for carrying out the interfacial polycondensation is preferably 0.1 seconds or longer and 3 minutes or shorter, and more preferably 1 second or longer and 1 minute or shorter.

Next, it is preferable to remove the organic solvent solution after the reaction by the liquid removal step. The removal of the organic solvent can use, for example, a method of holding the membrane in the vertical direction and removing an excess organic solvent by natural flowing down, a method of drying an organic solvent by blowing air with a blower, or a method of removing an excess organic solvent with a mixed fluid of water and air. Among them, in particular, a method of removing an organic solvent with a mixed fluid of water and air is particularly preferred.

When a mixed fluid of water and air is used, the separation functional layer swells due to water contained therein, and the water permeability is improved. In the case of natural flowing down, a gripping time in the vertical direction is preferably 1 minute or longer and 5 minutes or shorter, and more preferably 1 minute or longer and 3 minutes or shorter. When the gripping time is 1 minute or longer, it is easier to obtain the separation functional layer having desired functions, and when the gripping time is 5 minutes or shorter, it is possible to prevent the occurrence of defects due to excessive drying of the organic solvent, thereby preventing a decrease in performance.

By further adding a step of treating the composite semipermeable membrane obtained by the above method with a hydrophilic solvent at 25°C or higher and 90°C or lower for 1 minute or longer, the removal of the amide oligomer having a large amount of excess amino groups on the first surface side is promoted, and the pore diameter distribution in the thickness direction of the separation functional layer is made uniform, so that the monovalent ion/polyvalent ion selective separability of the composite semipermeable membrane can be further improved. Here, the "hydrophilic solvent" refers to a solvent that dissolves in water at 10 mass% or more, and may be used as an aqueous solution at 10 mass% or more. The solubility of the hydrophilic solvent in water is preferably 50 mass% or more, more preferably 80 mass% or more, and still more preferably 90 mass% or more, and the hydrophilic solvent is particularly preferably used as a bulk.

As the hydrophilic solvent, a solvent that does not attack the support membrane is suitable, and an alcohol is particularly preferred. Examples of the alcohol include a monohydric alcohol such as methanol, ethanol, or 2-propanol, glycols such as ethylene glycol, 1,3-butylene glycol (1,3-butanediol), diethylene glycol, triethylene glycol, polyethylene glycol, polypropylene glycol, and polybutylene glycol, glycerin, a diglycerin derivative, and a glycerin fatty acid ester. Among them, at least one alcohol selected from the group consisting of an alcohol, a glycol, and glycerin having a molecular weight of 500 or less is preferably used as the hydrophilic solvent from the viewpoint of easy removal by water washing and a high effect of improving the monovalent ion/polyvalent ion selective separability, and in particular, a glycol having a molecular weight of 200 or less having high permeability to the polyamide is particularly preferred as the hydrophilic solvent from the viewpoint of removing excess oligomers and the viewpoint of a pore diameter uniformity effect by reconstruction of the polyamide structure.

3. Composite Semipermeable Membrane Element

A composite semipermeable membrane element according to the present embodiment includes the composite semipermeable membrane according to the present embodiment. Since the composite semipermeable membrane element according to the present embodiment includes the composite semipermeable membrane according to the present embodiment, excellent monovalent ion/polyvalent ion selective separation performance is exhibited. One embodiment of a configuration of the composite semipermeable membrane element according to the present embodiment is described with reference to FIG. 2.

In one embodiment of the composite semipermeable membrane element according to the present embodiment, as shown in FIG. 2, a composite semipermeable membrane element 100 includes the composite semipermeable membrane 1, a feed-side flow channel material 11, a permeation-side flow channel material 12, a water collection pipe 6, a first end plate 7, and a second end plate 8. The composite semipermeable membrane 1 is bonded to form an envelope-shaped membrane 20. The envelope-shaped membrane 20 is spirally wound around the water collection pipe 6 to form a wound body 26. Other members such as a film and a filament may be wound around an outer periphery of the wound body 26 in order to protect the wound body 26.

The feed-side flow channel material 11 is disposed to face a feed-side surface of the composite semipermeable membrane 1, and is wound around the water collection pipe 6 together with the composite semipermeable membrane 1. As the feed-side flow channel material 11, for example, a net is preferably used. The permeation-side flow channel material 12 is disposed to face a permeation-side surface of the composite semipermeable membrane 1, and is wound around the water collection pipe 6 together with the composite semipermeable membrane 1. As the permeation-side flow channel material 12, for example, a tricot or a protrusion fixing sheet can be used. Note that, in the case where a protrusion (corresponding to the permeation-side flow channel material) is directly fixed to the surface of the composite semipermeable membrane on the substrate side, the permeation-side flow channel material 12 can be omitted. The water collection pipe 6 is a hollow cylindrical member and has a plurality of pores on a side surface. The first end plate 7 is a disc-shaped member having a plurality of supply ports. The first end plate 7 is disposed at a first end of the wound body 26. The second end plate 8 is a disc-shaped member having a concentrated water discharge port and a permeated water discharge port. The second end plate 8 is disposed at a second end of the wound body 26.

Separation of a fluid using the composite semipermeable membrane element 100 is described. feed water 101 is supplied to the wound body 26 through the plurality of supply ports in the first end plate 7. The feed water 101 moves in a feed-side flow channel formed by the feed-side flow channel material 11 on the feed-side surface of the composite semipermeable membrane 1. A fluid permeated through the composite semipermeable membrane 1 (shown as permeated water 102 in FIG. 2) moves in a permeation-side flow channel formed by the permeation-side flow channel material 12. The permeated water 102 that has reached the water collection pipe 6 enters the inside of the water collection pipe 6 through pores in the water collection pipe 6. The permeated water 102 that has flowed through the water collection pipe 6 is discharged through the second end plate 8 to the outside. On the other hand, a fluid that has not permeated through the composite semipermeable membrane 1 (shown as concentrated water 103 in FIG. 2) moves in the feed-side flow channel and is discharged through the second end plate 8 to the outside. In this manner, the feed water 101 is separated into the permeated water 102 and the concentrated water 103.

4. Method for Producing Composite Semipermeable Membrane Element

As a method for producing the composite semipermeable membrane element, a method disclosed in JPS44-14216B, JPH04-11928B, JPH11-226366A, or the like can be used.

5. Use of Composite Semipermeable Membrane and Composite Semipermeable Membrane Element

The composite semipermeable membrane and the composite semipermeable membrane element according to the present embodiment can be suitably used as a nanofiltration membrane and a nanofiltration membrane element for separation of a monovalent ion and a polyvalent ion. The composite semipermeable membrane and the composite semipermeable membrane element according to the present embodiment can be used for, for example, salt removal and mineral adjustment from brackish water or seawater, salt removal and mineral adjustment in the food field, acid recovery from industrial applications such as plating and refining, and metal recovery in an acid solution.

The composite semipermeable membrane element according to the present embodiment can also be a composite semipermeable membrane module in which the elements are connected in series or in parallel and housed in a pressure vessel.

The composite semipermeable membrane, the composite semipermeable membrane element, and the composite semipermeable membrane module, in combination with a pump for supplying raw water thereto, a device for pretreating raw water, and the like, can implement a fluid separation device. By using this separation device, raw water can be separated into permeated water, such as drinking water, and concentrated water, which does not permeate through the membrane, to obtain intended water.

6. Filtration Device

A filtration device according to the present embodiment includes a separation device and a flow rate control facility, the separation device includes the above composite semipermeable membrane element, and in the flow rate control facility, flow rates of permeated water and concentrated water of the separation device are controlled.

The separation device preferably includes a pressure vessel (vessel) filled with the composite semipermeable membrane element, and has a structure capable of supplying a solution to the vessel by a high-pressure pump.

In order to control the flow rates of the permeated water and the concentrated water in the composite semipermeable membrane element, the flow rate control facility for the permeated water and the concentrated water preferably includes an instrument (flowmeter) capable of measuring the flow rates of the permeated water and the concentrated water in the composite semipermeable membrane element. In the flow rate control for the permeated water, it is preferable that the high-pressure pump has a mechanism that receives data of a permeated water flowmeter at any time and controls an output of the high-pressure pump such that the flow rate of the permeated water is constant. In the flow rate control for the concentrated water, an electromagnetic valve is preferably provided near a concentrated water flowmeter, and the electromagnetic valve preferably has a mechanism that receives data of the concentrated water flowmeter at any time and controls the flow rate of the concentrated water to be constant.

In the filtration device according to the present embodiment, in addition to the above, a pump, a pipe, a valve, a tank, a vessel, a temperature control device, an instrument (such as a pH meter, an electric conductivity meter, a flowmeter, or a pressure gauge), and the like can be selected and freely combined.

Examples

Hereinafter, the present invention is described in more detail with reference to Examples, but the present invention is not limited to these Examples.

<Positron Annihilation Lifetime Measurement Method Using Positron Beam Method>

The positron annihilation lifetime measurement for the separation functional layer was performed using a positron beam method as follows. The composite semipermeable membrane was washed with pure water at 70°C for 1 hour, and then allowed to stand in pure water at 25°C for 30 minutes. Thereafter, the composite semipermeable membrane was freeze-dried at -30°C under a reduced pressure and cut into 1.5 cm × 1.5 cm square to give a test sample. In a thin membrane corresponding positron annihilation lifetime measurement device equipped with a positron beam generator (this device was described in detail in, for example, Radiation Physics and Chemistry, 58, 603, Pergamon (2000)), a separation functional layer side of the test sample was measured with a total count number of 5,000,000 by using a scintillation counter made of barium difluoride using a photomultiplier tube under a beam intensity of 0.1 keV and 0.5 keV and a room temperature vacuum, and the analysis was performed by using POSITRONFIT. From an average lifetime $\tau$ of a third component obtained by the analysis, the average pore diameter in the case of a beam intensity of 0.1 keV was calculated as R1, and the average pore diameter in the case of a beam intensity of 0.5 keV was calculated as R2.

<Pore Number and Pore Diameter in Cross Section of Separation Functional Layer>

The pore number and the pore diameter in the cross section of the separation functional layer were measured using a field emission transmission microscope (hereinafter, referred to as "STEM") as follows. The composite semipermeable membrane was freeze-dried at -30°C under a reduced pressure and cut into 1.5 cm × 1.5 cm square to give a observation sample. Using STEM (HF5000 manufactured by Hitachi, Ltd.) using GMS3 (manufactured by Gatana) as software and DeConv. HAADF (manufactured by HREM) as plug-in, an image of a cross section of the separation functional layer in the composite semipermeable membrane was captured under conditions of a pressurizing power of 200 kV, a spherical aberration (Cs) of 1 $\mu$m, an aperture of 22 mrad, and an observation magnification of 100,000 times. An equivalent circle diameter obtained by converting the pore area of the obtained image into a perfect circle was calculated using ImageJ (Fiji), and a value obtained by rounding off the third decimal place was set as the pore diameter. Based on the obtained pore diameter, the total number P1 of pores having a pore diameter of 0.30 nm or more and 1.20 nm or less, the total number P2 of pores having a pore diameter of 0.50 nm or more and less than 0.80 nm, the total number P3 of pores having a pore diameter of 0.80 nm or more and 1.20 nm or less, and the total number P4 of pores having a pore diameter of more than 1.20 nm were measured. Three images were analyzed for each of randomly selected three different cross sections, and the average value of the obtained values was calculated.

<Measurement of Amino Group Density>

A 5 cm × 5 cm composite semipermeable membrane from which a substrate was physically peeled off was treated by using a freezing ultrathin section method, placed on a grid, and immersed in pure water for 4 hours, and then immersed in a 10 mass% aqueous solution of 2-propanol for 1 hour and washed, and made into a sample. Thereafter, an operation of immersing the sample in a $1.0 \times 10^{-3}$ mol/L aqueous solution of $Na_2WO_4 \cdot 2H_2O$ adjusted to a pH of 3.8 and 25°C for 10 minutes was performed three times in total, and then an operation of immersing the obtained sample in a $1.0 \times 10^{-7}$ mol/L aqueous solution of $Na_2WO_4 \cdot 2H_2O$ adjusted to a pH of 3.8 and 25°C for 7 minutes was performed four times in total. Thereafter, moisture in the sample was removed using a filter paper and then freeze-dried at -30°C to give an amino group density measurement sample. A cross-sectional image of the obtained amino group density measurement sample was captured using STEM (HF5000 manufactured by Hitachi High-Tech Corporation) under a condition of an acceleration voltage of 200 kV to acquire an STEM image at a magnification of 100,000 times. The obtained image was analyzed using image processing software, and in a cross section perpendicular to the surface of the composite semipermeable membrane (cross section perpendicular to the first surface), regions obtained by dividing the separation functional layer into five regions at an equal interval from the first surface side toward the second surface side were defined as regions a to e, and the amino group density was calculated for each of the regions a to e based on the luminance value by the above method. The amino group density in the region b was defined as Nb, the amino group density in the region d was defined as Nd, and Nb/Nd was calculated.

<Mg Removal Rate and Li Removal Rate>

An aqueous solution adjusted to a temperature of 25°C, a pH of 1, a sulfuric acid concentration of 100 mmol/L, a lithium sulfate concentration of 45 mmol/L, and a magnesium sulfate concentration of 115 mmol/L was supplied to the composite semipermeable membrane at a flow rate of 3.5 L/min, the pressure was adjusted such that a membrane permeation flux, which was a value converted into the amount of water permeation ($m^3$) per day per square meter of the membrane surface, was 0.4 $m^3/m^2$/day, and a membrane filtration treatment was performed. A concentration of magnesium ions (hereinafter "$Mg^{2+}$") and a concentration of lithium ions (hereinafter "$Li^+$") in the feed water and the permeated water were measured using a P-4010 type ICP (high-frequency inductively coupled plasma emission spectrometer) manufactured by Hitachi, Ltd., and a Mg removal rate and a Li removal rate were calculated based on the following equations.

Mg removal rate (%) = {1 - (concentration of $Mg^{2+}$ in permeated water)/(concentration of $Mg^{2+}$ in feed water)} $\times$ 100

Li removal rate (%) = {1 - (concentration of $Li^+$ in permeated water)/concentration of $Li^+$ in feed water)} $\times$ 100

<Monovalent Ion/divalent Ion Selectivity>

Using the values of the Mg removal rate and the Li removal rate calculated in the measurement of the above "Mg Removal Rate and Li Removal Rate", the monovalent ion/divalent ion selectivity was calculated based on the following equation.

$$\text{Monovalent ion/divalent ion selectivity} = (100 - \text{Li removal rate})/(100 - \text{Mg removal rate})$$

Note that, the above evaluation is performed using the $Mg^{2+}$ removal rate, but when the permeation of $Mg^{2+}$ can be inhibited, it can be considered that the permeation of other polyvalent ions can also be inhibited. This is because $Mg^{2+}$ is a typical divalent ion, and a trivalent or higher polyvalent ion generally has an ion size larger than that of a divalent ion.

<Glucose Permeability and Sucrose Permeability>

The glucose permeability B when 1000 ppm of a glucose aqueous solution having a temperature of 25°C and a pH of 6.5 was permeated through the composite semipermeable membrane at an operation pressure of 0.5 MPa and the sucrose permeability C when 1000 ppm of a sucrose aqueous solution having a temperature of 25°C and a pH of 6.5 was permeated through the composite semipermeable membrane at an operation pressure of 0.5 MPa were determined according to the following equations, and the glucose permeability with respect to the sucrose permeability (B/C) was calculated. Note that, a glucose concentration and a sucrose concentration were determined using a refractometer (RID-6A manufactured by Shimadzu Corporation).

Glucose permeability B = (glucose concentration in permeated water/glucose concentration in feed water) $\times$ 100

Sucrose permeability C = (sucrose concentration in permeated water/sucrose concentration in feed water) $\times$ 100

<Preparation of Support Membrane>

On a nonwoven fabric (air permeability: 1.0 cc/$cm^2$/s, thickness: 42 $\mu$m) made of a polyester fiber produced by using a papermaking method, an 18 mass% dimethylformamide (DMF) solution of polysulfone was cast at room temperature (25°C) with an application thickness of 180 $\mu$m, and then immediately immersed in pure water for 5 minutes to form a porous support layer on the substrate, thereby preparing a support membrane.

<Preparation of Composite Semipermeable Membrane>

(Example 1)

A membrane surface temperature of the support membrane obtained above was adjusted to 25°C while blowing air adjusted to 25°C to the support membrane to remove excess moisture. The support membrane was immersed for 15 seconds in an aqueous solution at 30°C in which 2.0 mass% of homopiperazine (logP: -0.65), 250 ppm of sodium dodecyl diphenyl ether disulfonate, and 1.0 mass% of trisodium phosphate were dissolved, then nitrogen was blown from an air nozzle to remove excess aqueous solution, to thereby form a coating layer of an amine aqueous solution on the support membrane. Further, the membrane was immersed in an n-decane solution at 38°C containing 0. 2 mass% of TMC, and then allowed to stand at an atmosphere humidity (relative humidity) of 80% and at 25°C for 1 minute, and two fluids (pure water and air) were sprayed onto the membrane surface to remove the solution on the surface. Thereafter, the membrane was washed with pure water at 80°C to obtain a composite semipermeable membrane.

(Example 2)

After performing the same operation as in Example 1, the composite semipermeable membrane was further immersed in glycerin at 80°C for 2 minutes, and then immersed in pure water at 25°C for 24 hours to prepare a composite semipermeable membrane.

(Example 3)

After performing the same operation as in Example 1, the composite semipermeable membrane was further immersed in triethylene glycol at 80°C for 2 minutes, and then immersed in pure water at 25°C for 24 hours to prepare a composite semipermeable membrane.

(Example 4)

A composite semipermeable membrane was prepared in the same method as in Example 1 except that an amine aqueous solution was applied onto the support membrane and allowed to stand for 15 seconds to form a coating layer.

(Example 5)

A composite semipermeable membrane was prepared in the same method as in Example 3 except that an amine aqueous solution was applied onto the support membrane and allowed to stand for 15 seconds to form a coating layer.

(Example 6)

A composite semipermeable membrane was prepared in the same method as in Example 4 except that the polyfunctional aliphatic amine was changed to 2-methylpiperazine (logP: -0.44).

(Example 7)

A composite semipermeable membrane was prepared in the same method as in Example 6 except that the atmosphere humidity was changed to 90%.

(Example 8)

A composite semipermeable membrane was prepared in the same method as in Example 6 except that the atmosphere humidity was changed to 95%.

(Example 9)

After performing the same operation as in Example 8, the composite semipermeable membrane was further immersed in 1,3-butanediol at 80°C for 2 minutes, and then immersed in pure water at 25°C for 24 hours to prepare a composite semipermeable membrane.

(Example 10)

A composite semipermeable membrane was prepared in the same method as in Example 1 except that the polyfunctional aliphatic amine was changed to 2,5-dimethylpiperazine (logP: -0.12).

(Example 11)

A composite semipermeable membrane was prepared in the same method as in Example 10 except that the atmosphere humidity was changed to 90%.

(Example 12)

A composite semipermeable membrane was prepared in the same method as in Example 11 except that an amine aqueous solution was applied onto the support membrane and allowed to stand for 15 seconds to form a coating layer.

(Example 13)

After performing the same operation as in Example 12, the composite semipermeable membrane was further immersed in diethylene glycol at 80°C for 2 minutes, and then immersed in pure water at 25°C for 24 hours to prepare a composite semipermeable membrane.

(Example 14)

A composite semipermeable membrane was prepared in the same method as in Example 1 except that the polyfunctional aliphatic amine was changed to 2,5-diethylpiperazine (logP: 0.85).

(Example 15)

A composite semipermeable membrane was prepared in the same method as in Example 13 except that the polyfunctional aliphatic amine was changed to 2,5-diethylpiperazine and diethylene glycol was changed to ethylene glycol.

(Example 16)

A composite semipermeable membrane was prepared in the same method as in Example 8 except that the polyfunctional aliphatic amine was changed to 2,5-diethylpiperazine.

(Example 17)

After performing the same operation as in Example 16, the composite semipermeable membrane was further immersed in ethylene glycol at 80°C for 2 minutes, and then immersed in pure water at 25°C for 24 hours to prepare a composite semipermeable membrane.

(Comparative Example 1)

A composite semipermeable membrane was prepared in the same method as in Example 1 except that the polyfunctional aliphatic amine was piperazine and the atmosphere humidity was changed to 75%.

(Comparative Example 2)

After performing the same operation as in Example 1, the composite semipermeable membrane was further immersed in glycerin at 80°C for 2 minutes, and then immersed in pure water at 25°C for 24 hours to prepare a composite semipermeable membrane.

(Comparative Example 3)

A composite semipermeable membrane was prepared in the same method as in Comparative Example 1 except that an amine aqueous solution was applied onto the support membrane and allowed to stand for 15 seconds to form a coating layer.

(Comparative Example 4)

After performing the same operation as in Comparative Example 3, the composite semipermeable membrane was immersed in ethylene glycol at 80°C for 2 minutes, and then immersed in pure water at 25°C for 24 hours to prepare a composite semipermeable membrane.

(Comparative Example 5)

A composite semipermeable membrane was prepared in the same method as in Comparative Example 3 except that the concentration of the polyfunctional acid chloride was changed to 0.4 mass%.

(Comparative Example 6)

A composite semipermeable membrane was prepared in the same method as in Comparative Example 3 except that the temperature during interfacial polycondensation was changed to 80°C.

(Comparative Example 7)

After performing the same operation as in Comparative Example 3, the composite semipermeable membrane was further immersed a 1.0 mass% propionic anhydride aqueous solution at 25°C for 10 minutes, and then immersed in pure water at 25°C for 24 hours to prepare a composite semipermeable membrane.

(Comparative Example 8)

A composite semipermeable membrane was prepared in the same method as in Example 1 except that the polyfunctional aliphatic amine was changed to 4,4'-bipiperidine (logP: -0.17).

(Comparative Example 9)

A composite semipermeable membrane was prepared in the same method as in Comparative Example 8 except that an amine aqueous solution was applied onto the support membrane and allowed to stand for 15 seconds to form a coating layer.

(Comparative Example 10)

A composite semipermeable membrane was prepared in the same method as in Comparative Example 9 except that the atmosphere humidity was changed to 90%.

(Comparative Example 11)

A composite semipermeable membrane was prepared in the same method as in Example 4 except that the atmosphere humidity was changed to 75%.

(Comparative Example 12)

A composite semipermeable membrane was prepared in the same method as in Comparative Example 11 except that the concentration of the polyfunctional acid chloride was changed to 0.4 mass%.

(Comparative Example 13)

A composite semipermeable membrane was prepared in the same method as in Comparative Example 11 except that the temperature during interfacial polycondensation was changed to 80°C.

(Comparative Example 14)

After performing the same operation as in Comparative Example 11, the composite semipermeable membrane was further immersed in triethylene glycol at 80°C for 2 minutes, and then immersed in pure water at 25°C for 24 hours to prepare a composite semipermeable membrane.

(Comparative Example 15)

After performing the same operation as in Comparative Example 11, the composite semipermeable membrane was further immersed a 1.0 mass% acetic anhydride aqueous solution at 25°C for 10 minutes, and then immersed in pure water at 25°C for 24 hours to prepare a composite semipermeable membrane.

(Comparative Example 16)

A composite semipermeable membrane was prepared in the same method as in Example 6 except that the atmosphere humidity was changed to 75%.

(Comparative Example 17)

A composite semipermeable membrane was prepared in the same method as in Comparative Example 16 except that the concentration of the polyfunctional acid chloride was changed to 0.4 mass%.

(Comparative Example 18)

A composite semipermeable membrane was prepared in the same method as in Comparative Example 16 except that the temperature during interfacial polycondensation was changed to 80°C.

(Comparative Example 19)

After performing the same operation as in Comparative Example 16, the composite semipermeable membrane was further immersed in 1,3-butanediol at 80°C for 2 minutes, and then immersed in pure water at 25°C for 24 hours to prepare a composite semipermeable membrane.

(Comparative Example 20)

After performing the same operation as in Comparative Example 16, the composite semipermeable membrane was further immersed a 1.0 mass% propionic anhydride aqueous solution at 25°C for 10 minutes, and then immersed in pure water at 25°C for 24 hours to prepare a composite semipermeable membrane.

(Comparative Example 21)

A composite semipermeable membrane was prepared in the same method as in Example 12 except that the atmosphere humidity was changed to 75%.

(Comparative Example 22)

A composite semipermeable membrane was prepared in the same method as in Comparative Example 21 except that the concentration of the polyfunctional acid chloride was changed to 0.4 mass%.

(Comparative Example 23)

A composite semipermeable membrane was prepared in the same method as in Comparative Example 21 except that the temperature during interfacial polycondensation was changed to 80°C.

(Comparative Example 24)

After performing the same operation as in Comparative Example 21, the composite semipermeable membrane was further immersed in diethylene glycol at 80°C for 2 minutes, and then immersed in pure water at 25°C for 24 hours to prepare a composite semipermeable membrane.

(Comparative Example 25)

After performing the same operation as in Comparative Example 21, the composite semipermeable membrane was further immersed a 1.0 mass% acetic anhydride aqueous solution at 25°C for 10 minutes, and then immersed in pure water at 25°C for 24 hours to prepare a composite semipermeable membrane.

(Comparative Example 26)

A composite semipermeable membrane was prepared in the same method as in Example 16 except that the atmosphere humidity was changed to 75%.

(Comparative Example 27)

A composite semipermeable membrane was prepared in the same method as in Comparative Example 26 except that the concentration of the polyfunctional acid chloride was changed to 0.4 mass%.

(Comparative Example 28)

A composite semipermeable membrane was prepared in the same method as in Comparative Example 26 except that the temperature during interfacial polycondensation was changed to 80°C.

(Comparative Example 29)

After performing the same operation as in Comparative Example 26, the composite semipermeable membrane was further immersed in ethylene glycol at 80°C for 2 minutes, and then immersed in pure water at 25°C for 24 hours to prepare a composite semipermeable membrane.

(Comparative Example 30)

After performing the same operation as in Comparative Example 26, the composite semipermeable membrane was further immersed a 1.0 mass% acetic anhydride aqueous solution at 25°C for 10 minutes, and then immersed in pure water at 25°C for 24 hours to prepare a composite semipermeable membrane.

(Comparative Example 31)

A composite semipermeable membrane was prepared in the same method as in Comparative Example 1 except that the polyfunctional aliphatic amine was changed to 2,5-diisopropylpiperazine (logP: 1.65).

(Comparative Example 32)

A composite semipermeable membrane was prepared in the same method as in Comparative Example 31 except that the atmosphere humidity was changed to 95%, an amine aqueous solution was applied onto the support membrane and allowed to stand for 15 seconds to form a coating layer, and then the membrane was immersed in ethylene glycol at 80°C for 2 minutes and then immersed in pure water at 25°C for 24 hours.

(Comparative Example 33)

A composite semipermeable membrane was prepared in the same method as in Comparative Example 32 except that the polyfunctional aliphatic amine was changed to methaphenylenediamine (logP: 0.43).

Table 1

| | | Polyfunctional aliphatic amine | | | Polyfunctional acid chloride | |
| --- | --- | --- | --- | --- | --- | --- |
| | | Kind | Concentration (mass%) | Molecular weight | Kind | Concentration (mass%) |
| | Ex. 1 | Homopiperazine | 2.0 | 100 | Trimesoyl chloride | 0.2 |
| | Ex. 2 | Homopiperazine | 2.0 | 100 | Trimesoyl chloride | 0.2 |
| | Ex. 3 | Homopiperazine | 2.0 | 100 | Trimesoyl chloride | 0.2 |
| | Ex. 4 | Homopiperazine | 2.0 | 100 | Trimesoyl chloride | 0.2 |
| | Ex. 5 | Homopiperazine | 2.0 | 100 | Trimesoyl chloride | 0.2 |

(continued)

| | Polyfunctional aliphatic amine | | | Polyfunctional acid chloride | |
|---|---|---|---|---|---|
| | Kind | Concentration (mass%) | Molecular weight | Kind | Concentration (mass%) |
| Ex. 6 | 2-Methylpiperazine | 2.0 | 100 | Trimesoyl chloride | 0.2 |
| Ex. 7 | 2-Methylpiperazine | 2.0 | 100 | Trimesoyl chloride | 0.2 |
| Ex. 8 | 2-Methylpiperazine | 2.0 | 100 | Trimesoyl chloride | 0.2 |
| Ex. 9 | 2-Methylpiperazine | 2.0 | 100 | Trimesoyl chloride | 0.2 |
| Ex. 10 | 2,5-Dimethylpiperazine | 2.0 | 114 | Trimesoyl chloride | 0.2 |
| Ex. 11 | 2,5-Dimethylpiperazine | 2.0 | 114 | Trimesoyl chloride | 0.2 |
| Ex. 12 | 2,5-Dimethylpiperazine | 2.0 | 114 | Trimesoyl chloride | 0.2 |
| Ex. 13 | 2,5-Dimethylpiperazine | 2.0 | 114 | Trimesoyl chloride | 0.2 |
| Ex. 14 | 2,5-Diethylpiperazine | 2.0 | 142 | Trimesoyl chloride | 0.2 |
| Ex. 15 | 2,5-Diethylpiperazine | 2.0 | 142 | Trimesoyl chloride | 0.2 |
| Ex. 16 | 2,5-Diethylpiperazine | 2.0 | 142 | Trimesoyl chloride | 0.2 |
| Ex. 17 | 2,5-Diethylpiperazine | 2.0 | 142 | Trimesoyl chloride | 0.2 |

Table 1 (continued)

| | Atmosphere humidity (%) | Amine contact method | Interfacial polymerization temperature (°C) | Hydrophilic solvent treatment |
|---|---|---|---|---|
| Ex. 1 | 80 | Immersion | 25 | - |
| Ex. 2 | 80 | Immersion | 25 | Glycerin |
| Ex. 3 | 80 | Immersion | 25 | Triethylene glycol |
| Ex. 4 | 80 | Surface application | 25 | - |
| Ex. 5 | 80 | Surface application | 25 | Triethylene glycol |
| Ex. 6 | 80 | Surface application | 25 | - |
| Ex. 7 | 90 | Surface application | 25 | - |
| Ex. 8 | 95 | Surface application | 25 | - |
| Ex. 9 | 95 | Surface application | 25 | 1,3-Butanediol |
| Ex. 10 | 80 | Immersion | 25 | - |
| Ex. 11 | 90 | Immersion | 25 | - |
| Ex. 12 | 90 | Surface application | 25 | - |
| Ex. 13 | 90 | Surface application | 25 | Diethylene glycol |
| Ex. 14 | 80 | Immersion | 25 | - |
| Ex. 15 | 90 | Surface application | 25 | Ethylene glycol |
| Ex. 16 | 95 | Surface application | 25 | - |
| Ex. 17 | 95 | Surface application | 25 | Ethylene glycol |

Table 2

| | Polyfunctional aliphatic amine | | | Polyfunctional acid chloride | |
|---|---|---|---|---|---|
| | Kind | Concentration (mass%) | Molecular weight | Kind | Concentration (mass%) |
| Comp. Ex. 1 | Piperazine | 2.0 | 86 | Trimesoyl chloride | 0.2 |
| Comp. Ex. 2 | Piperazine | 2.0 | 86 | Trimesoyl chloride | 0.2 |
| Comp. Ex. 3 | Piperazine | 2.0 | 86 | Trimesoyl chloride | 0.2 |
| Comp. Ex. 4 | Piperazine | 2.0 | 86 | Trimesoyl chloride | 0.2 |
| Comp. Ex. 5 | Piperazine | 2.0 | 86 | Trimesoyl chloride | 0.4 |
| Comp. Ex. 6 | Piperazine | 2.0 | 86 | Trimesoyl chloride | 0.2 |
| Comp. Ex. 7 | Piperazine | 2.0 | 86 | Trimesoyl chloride | 0.2 |
| Comp. Ex. 8 | 4,4'-Bipiperidine | 2.0 | 168 | Trimesoyl chloride | 0.2 |
| Comp. Ex. 9 | 4,4'-Bipiperidine | 2.0 | 168 | Trimesoyl chloride | 0.2 |
| Comp. Ex. 10 | 4,4'-Bipiperidine | 2.0 | 168 | Trimesoyl chloride | 0.2 |
| Comp. Ex. 11 | Homopiperazine | 2.0 | 100 | Trimesoyl chloride | 0.2 |
| Comp. Ex. 12 | Homopiperazine | 2.0 | 100 | Trimesoyl chloride | 0.4 |
| Comp. Ex. 13 | Homopiperazine | 2.0 | 100 | Trimesoyl chloride | 0.2 |
| Comp. Ex. 14 | Homopiperazine | 2.0 | 100 | Trimesoyl chloride | 0.2 |
| Comp. Ex. 15 | Homopiperazine | 2.0 | 100 | Trimesoyl chloride | 0.2 |

Table 2 (continued)

| | Atmosphere humidity (%) | Amine contact method | Interfacial polymerization temperature (°C) | Hydrophilic solvent treatment |
|---|---|---|---|---|
| Comp. Ex. 1 | 75 | Immersion | 25 | - |
| Comp. Ex. 2 | 75 | Immersion | 25 | Glycerin |
| Comp. Ex. 3 | 75 | Surface application | 25 | - |
| Comp. Ex. 4 | 75 | Surface application | 25 | Ethylene glycol |
| Comp. Ex. 5 | 75 | Surface application | 25 | - |
| Comp. Ex. 6 | 75 | Surface application | 80 | - |
| Comp. Ex. 7 | 75 | Surface application | 25 | Propionic anhydride |
| Comp. Ex. 8 | 80 | Immersion | 25 | - |
| Comp. Ex. 9 | 80 | Surface application | 25 | - |
| Comp. Ex. 10 | 90 | Surface application | 25 | - |
| Comp. Ex. 11 | 75 | Surface application | 25 | - |
| Comp. Ex. 12 | 75 | Surface application | 25 | - |
| Comp. Ex. 13 | 75 | Surface application | 80 | - |
| Comp. Ex. 14 | 75 | Surface application | 25 | Triethylene glycol |
| Comp. Ex. 15 | 75 | Surface application | 25 | Acetic anhydride |

Table 3

| | Polyfunctional aliphatic amine | | | Polyfunctional acid chloride | |
|---|---|---|---|---|---|
| | Kind | Concentration (mass%) | Molecular weight | Kind | Concentration (mass%) |
| Comp. Ex. 16 | 2-Methylpiperazine | 2.0 | 100 | Trimesoyl chloride | 0.2 |
| Comp. Ex. 17 | 2-Methylpiperazine | 2.0 | 100 | Trimesoyl chloride | 0.4 |
| Comp. Ex. 18 | 2-Methylpiperazine | 2.0 | 100 | Trimesoyl chloride | 0.2 |
| Comp. Ex. 19 | 2-Methylpiperazine | 2.0 | 100 | Trimesoyl chloride | 0.2 |
| Comp. Ex. 20 | 2-Methylpiperazine | 2.0 | 100 | Trimesoyl chloride | 0.2 |
| Comp. Ex. 21 | 2,5-Dimethylpiperazine | 2.0 | 114 | Trimesoyl chloride | 0.2 |
| Comp. Ex. 22 | 2,5-Dimethylpiperazine | 2.0 | 114 | Trimesoyl chloride | 0.4 |
| Comp. Ex. 23 | 2,5-Dimethylpiperazine | 2.0 | 114 | Trimesoyl chloride | 0.2 |
| Comp. Ex. 24 | 2,5-Dimethylpiperazine | 2.0 | 114 | Trimesoyl chloride | 0.2 |
| Comp. Ex. 25 | 2,5-Dimethylpiperazine | 2.0 | 114 | Trimesoyl chloride | 0.2 |
| Comp. Ex. 26 | 2,5-Diethylpiperazine | 2.0 | 142 | Trimesoyl chloride | 0.2 |
| Comp. Ex. 27 | 2,5-Diethylpiperazine | 2.0 | 142 | Trimesoyl chloride | 0.4 |
| Comp. Ex. 28 | 2,5-Diethylpiperazine | 2.0 | 142 | Trimesoyl chloride | 0.2 |
| Comp. Ex. 29 | 2,5-Diethylpiperazine | 2.0 | 142 | Trimesoyl chloride | 0.2 |
| Comp. Ex. 30 | 2,5-Diethylpiperazine | 2.0 | 142 | Trimesoyl chloride | 0.2 |
| Comp. Ex. 31 | 2,5-Diisopropylpiperazine | 2.0 | 170 | Trimesoyl chloride | 0.2 |
| Comp. Ex. 32 | 2,5-Diisopropylpiperazine | 2.0 | 170 | Trimesoyl chloride | 0.2 |
| Comp. Ex. 33 | Methaphenylenediamine | 2.0 | 108 | Trimesoyl chloride | 0.2 |

Table 3 (continued)

| | Atmosphere humidity (%) | Amine contact method | Interfacial polymerization temperature (°C) | Hydrophilic solvent treatment |
|---|---|---|---|---|
| Comp. Ex. 16 | 75 | Surface application | 25 | - |
| Comp. Ex. 17 | 75 | Surface application | 25 | - |
| Comp. Ex. 18 | 75 | Surface application | 80 | - |
| Comp. Ex. 19 | 75 | Surface application | 25 | 1,3-Butanediol |
| Comp. Ex. 20 | 75 | Surface application | 25 | Propionic anhydride |
| Comp. Ex. 21 | 75 | Surface application | 25 | - |
| Comp. Ex. 22 | 75 | Surface application | 25 | - |
| Comp. Ex. 23 | 75 | Surface application | 80 | - |
| Comp. Ex. 24 | 75 | Surface application | 25 | Diethylene glycol |
| Comp. Ex. 25 | 75 | Surface application | 25 | Acetic anhydride |
| Comp. Ex. 26 | 75 | Surface application | 25 | - |
| Comp. Ex. 27 | 75 | Surface application | 25 | - |
| Comp. Ex. 28 | 75 | Surface application | 80 | - |
| Comp. Ex. 29 | 75 | Surface application | 25 | Ethylene glycol |
| Comp. Ex. 30 | 75 | Surface application | 25 | Acetic anhydride |

(continued)

| | Atmosphere humidity (%) | Amine contact method | Interfacial polymerization temperature (°C) | Hydrophilic solvent treatment |
|---|---|---|---|---|
| Comp. Ex. 31 | 75 | Immersion | 25 | - |
| Comp. Ex. 32 | 95 | Surface application | 25 | Ethylene glycol |
| Comp. Ex. 33 | 95 | Surface application | 25 | Ethylene glycol |

Table 4

| | R1 (nm) | R1/R2 (nm/nm) | P2/P1 | P3/P2 | P4/P1 | Presence or absence of pleated structure | Nb/Nd | Nb $\times 10^{23}$ (mol/nm$^2$) | Operating pressure (MPa) |
|---|---|---|---|---|---|---|---|---|---|
| Ex. 1 | 0.55 | 0.91 | 0.23 | 0.19 | 0.008 | absent | 0.94 | 1.67 | 0.78 |
| Ex. 2 | 0.55 | 0.92 | 0.25 | 0.18 | 0.008 | absent | 0.91 | 1.45 | 0.75 |
| Ex. 3 | 0.71 | 0.93 | 0.25 | 0.17 | 0.008 | absent | 0.79 | 1.14 | 0.75 |
| Ex. 4 | 0.61 | 0.94 | 0.29 | 0.12 | 0.007 | absent | 0.72 | 1.35 | 0.70 |
| Ex. 5 | 0.67 | 0.97 | 0.31 | 0.08 | 0.005 | absent | 0.65 | 1.00 | 0.62 |
| Ex. 6 | 0.55 | 0.90 | 0.28 | 0.13 | 0.008 | present | 0.75 | 1.30 | 0.49 |
| Ex. 7 | 0.57 | 0.92 | 0.29 | 0.11 | 0.007 | present | 0.70 | 1.21 | 0.45 |
| Ex. 8 | 0.58 | 0.93 | 0.30 | 0.09 | 0.006 | present | 0.67 | 1.12 | 0.40 |
| Ex. 9 | 0.60 | 0.95 | 0.34 | 0.05 | 0.005 | present | 0.61 | 0.98 | 0.35 |
| Ex. 10 | 0.57 | 0.92 | 0.29 | 0.11 | 0.007 | present | 0.79 | 1.61 | 0.50 |
| Ex. 11 | 0.58 | 0.96 | 0.30 | 0.09 | 0.005 | present | 0.75 | 1.51 | 0.47 |
| Ex. 12 | 0.59 | 0.98 | 0.33 | 0.07 | 0.004 | present | 0.64 | 1.30 | 0.34 |
| Ex. 13 | 0.61 | 1.00 | 0.35 | 0.05 | 0.004 | present | 0.60 | 0.85 | 0.35 |
| Ex. 14 | 0.55 | 0.93 | 0.26 | 0.06 | 0.005 | present | 0.80 | 1.70 | 0.43 |
| Ex. 15 | 0.62 | 0.97 | 0.28 | 0.07 | 0.005 | present | 0.60 | 0.79 | 0.41 |
| Ex. 16 | 0.63 | 1.00 | 0.31 | 0.04 | 0.004 | present | 0.63 | 1.13 | 0.32 |
| Ex. 17 | 0.62 | 1.01 | 0.32 | 0.02 | 0.003 | present | 0.58 | 0.75 | 0.30 |

Table 4 (continued)

| | Membrane performance | | | | | |
|---|---|---|---|---|---|---|
| | Li removal rate (%) | Mg removal rate (%) | Monovalent ion/polyvalent ion selectivity | Glucose permeability (%) [B] | Sucrose permeability (%) [C] | Glucose/sucrose selectivity |
| Ex. 1 | 64.20 | 99.50 | 72 | 7.2 | 0.6 | 12 |
| Ex. 2 | 63.50 | 99.53 | 78 | 8.0 | 0.6 | 14 |
| Ex. 3 | 62.30 | 99.53 | 80 | 9.4 | 0.6 | 17 |
| Ex. 4 | 57.50 | 99.60 | 106 | 10.7 | 0.4 | 28 |
| Ex. 5 | 51.20 | 99.72 | 174 | 19.5 | 0.3 | 77 |
| Ex. 6 | 59.70 | 99.55 | 90 | 11.1 | 0.4 | 28 |
| Ex. 7 | 57.30 | 99.57 | 99 | 14.2 | 0.3 | 49 |
| Ex. 8 | 55.00 | 99.65 | 129 | 16.6 | 0.3 | 65 |

(continued)

| | Membrane performance | | | | | |
|---|---|---|---|---|---|---|
| | Li removal rate (%) | Mg removal rate (%) | Monovalent ion/polyvalent ion selectivity | Glucose permeability (%) [B] | Sucrose permeability (%) [C] | Glucose/sucrose selectivity |
| Ex. 9 | 52.30 | 99.70 | 159 | 22.2 | 0.2 | 96 |
| Ex. 10 | 59.30 | 99.60 | 102 | 10.2 | 0.4 | 25 |
| Ex. 11 | 57.20 | 99.70 | 143 | 12.0 | 0.3 | 44 |
| Ex. 12 | 49.95 | 99.73 | 185 | 15.0 | 0.3 | 55 |
| Ex. 13 | 48.50 | 99.78 | 234 | 25.8 | 0.2 | 138 |
| Ex. 14 | 58.80 | 99.70 | 137 | 10.3 | 0.3 | 38 |
| Ex. 15 | 56.50 | 99.72 | 155 | 17.4 | 0.3 | 69 |
| Ex. 16 | 50.40 | 99.78 | 225 | 17.8 | 0.3 | 70 |
| Ex. 17 | 44.50 | 99.81 | 292 | 25.8 | 0.2 | 119 |

Table 5

| | R1 (nm) | R1/R2 (nm/nm) | P2/P1 | P3/P2 | P4/P1 | Presence or absence of pleated structure | Nb/Nd | $Nb \times 10^{23}$ (mol/nm$^2$) | Operating pressure (MPa) |
|---|---|---|---|---|---|---|---|---|---|
| Comp. Ex. 1 | 0.50 | 0.80 | 0.19 | 0.22 | 0.013 | absent | 1.00 | 2.87 | 0.81 |
| Comp. Ex. 2 | 0.53 | 0.81 | 0.22 | 0.24 | 0.017 | absent | 0.99 | 2.75 | 0.80 |
| Comp. Ex. 3 | 0.52 | 0.79 | 0.19 | 0.20 | 0.012 | absent | 1.05 | 3.00 | 0.85 |
| Comp. Ex. 4 | 0.54 | 0.83 | 0.17 | 0.23 | 0.015 | absent | 0.99 | 2.58 | 0.83 |
| Comp. Ex. 5 | 0.55 | 0.79 | 0.19 | 0.24 | 0.010 | absent | 0.98 | 2.49 | 0.84 |
| Comp. Ex. 6 | 0.50 | 0.82 | 0.18 | 0.22 | 0.009 | absent | 1.03 | 3.45 | 0.97 |
| Comp. Ex. 7 | 0.47 | 0.75 | 0.16 | 0.20 | 0.015 | absent | 0.90 | 2.22 | 0.98 |
| Comp. Ex. 8 | 0.78 | 0.81 | 0.21 | 0.19 | 0.009 | present | 0.80 | 2.10 | 0.65 |
| Comp. Ex. 9 | 0.77 | 0.80 | 0.22 | 0.18 | 0.009 | present | 0.76 | 1.90 | 0.66 |
| Comp. Ex. 10 | 0.76 | 0.83 | 0.23 | 0.14 | 0.008 | present | 0.73 | 1.70 | 0.67 |
| Comp. Ex. 11 | 0.51 | 0.83 | 0.18 | 0.22 | 0.011 | absent | 1.02 | 1.75 | 0.80 |
| Comp. Ex. 12 | 0.52 | 0.82 | 0.18 | 0.23 | 0.008 | absent | 0.95 | 1.45 | 0.82 |
| Comp. Ex. 13 | 0.50 | 0.85 | 0.17 | 0.20 | 0.007 | absent | 1.00 | 2.01 | 0.94 |

(continued)

|  | R1 (nm) | R1/R2 (nm/nm) | P2/P1 | P3/P2 | P4/P1 | Presence or absence of pleated structure | Nb/Nd | $Nb \times 10^{23}$ (mol/nm$^2$) | Operating pressure (MPa) |
|---|---|---|---|---|---|---|---|---|---|
| Comp. Ex. 14 | 0.53 | 0.86 | 0.18 | 0.22 | 0.012 | absent | 0.96 | 1.51 | 0.78 |
| Comp. Ex. 15 | 0.48 | 0.78 | 0.16 | 0.19 | 0.012 | absent | 0.91 | 1.30 | 0.96 |

Table 5 (continued)

|  | Membrane performance | | | | | |
|---|---|---|---|---|---|---|
|  | Li removal rate (%) | Mg removal rate (%) | Monovalent ion/polyvalent ion selectivity | Glucose permeability (%) [B] | Sucrose permeability (%) [C] | Glucose/sucrose selectivity |
| Comp. Ex. 1 | 72.00 | 99.20 | 35 | 4.2 | 1.3 | 3 |
| Comp. Ex. 2 | 70.00 | 99.00 | 30 | 4.5 | 1.5 | 3 |
| Comp. Ex. 3 | 75.60 | 99.30 | 35 | 4.2 | 1.3 | 3 |
| Comp. Ex. 4 | 73.60 | 99.10 | 29 | 4.4 | 1.3 | 3 |
| Comp. Ex. 5 | 75.60 | 99.40 | 41 | 3.7 | 0.9 | 4 |
| Comp. Ex. 6 | 80.64 | 99.48 | 37 | 4.4 | 1.3 | 3 |
| Comp. Ex. 7 | 82.80 | 99.12 | 20 | 2.6 | 1.3 | 2 |
| Comp. Ex. 8 | 69.00 | 99.45 | 56 | 8.3 | 0.5 | 17 |
| Comp. Ex. 9 | 71.20 | 99.48 | 55 | 10.5 | 0.4 | 27 |
| Comp. Ex. 10 | 72.00 | 99.54 | 61 | 12.9 | 0.3 | 41 |
| Comp. Ex. 11 | 69.00 | 99.35 | 48 | 4.7 | 1.0 | 5 |
| Comp. Ex. 12 | 72.45 | 99.51 | 57 | 4.1 | 0.7 | 6 |
| Comp. Ex. 13 | 77.28 | 99.57 | 53 | 3.4 | 0.6 | 5 |
| Comp. Ex. 14 | 67.62 | 99.27 | 44 | 4.9 | 1.1 | 4 |
| Comp. Ex. 15 | 79.35 | 99.29 | 29 | 3.1 | 1.1 | 3 |

Table 6

|  | R1 (nm) | R1/R2 (nm/nm) | P2/P1 | P3/P2 | P4/P1 | Presence or absence of pleated structure | Nb/Nd | $Nb \times 10^{23}$ (mol/nm$^2$) | Operating pressure (MPa) |
|---|---|---|---|---|---|---|---|---|---|
| Comp. Ex. 16 | 0.51 | 0.82 | 0.20 | 0.22 | 0.011 | present | 1.04 | 1.70 | 0.62 |
| Comp. Ex. 17 | 0.52 | 0.81 | 0.19 | 0.23 | 0.009 | present | 0.98 | 1.41 | 0.64 |
| Comp. Ex. 18 | 0.50 | 0.84 | 0.18 | 0.22 | 0.007 | present | 1.00 | 1.96 | 0.70 |
| Comp. Ex. 19 | 0.53 | 0.85 | 0.19 | 0.24 | 0.013 | present | 0.96 | 1.46 | 0.60 |
| Comp. Ex. 20 | 0.48 | 0.77 | 0.15 | 0.20 | 0.012 | present | 0.88 | 1.26 | 0.81 |

(continued)

| | R1 (nm) | R1/R2 (nm/nm) | P2/P1 | P3/P2 | P4/P1 | Presence or absence of pleated structure | Nb/Nd | Nb × 10²³ (mol/nm²) | Operating pressure (MPa) |
|---|---|---|---|---|---|---|---|---|---|
| Comp. Ex. 21 | 0.54 | 0.84 | 0.20 | 0.22 | 0.009 | present | 1.03 | 1.95 | 0.58 |
| Comp. Ex. 22 | 0.54 | 0.83 | 0.21 | 0.23 | 0.007 | present | 0.96 | 1.62 | 0.60 |
| Comp. Ex. 23 | 0.52 | 0.85 | 0.19 | 0.22 | 0.006 | present | 1.01 | 2.24 | 0.68 |
| Comp. Ex. 24 | 0.55 | 0.87 | 0.22 | 0.24 | 0.010 | present | 0.97 | 1.68 | 0.56 |
| Comp. Ex. 25 | 0.49 | 0.79 | 0.15 | 0.20 | 0.010 | present | 0.89 | 1.44 | 0.71 |
| Comp. Ex. 26 | 0.54 | 0.85 | 0.20 | 0.22 | 0.009 | present | 1.05 | 1.90 | 0.56 |
| Comp. Ex. 27 | 0.54 | 0.84 | 0.21 | 0.23 | 0.007 | present | 0.98 | 1.58 | 0.60 |
| Comp. Ex. 28 | 0.52 | 0.85 | 0.18 | 0.22 | 0.006 | present | 1.03 | 2.19 | 0.64 |
| Comp. Ex. 29 | 0.55 | 0.87 | 0.23 | 0.24 | 0.010 | present | 0.96 | 1.63 | 0.54 |
| Comp. Ex. 30 | 0.49 | 0.80 | 0.14 | 0.20 | 0.010 | present | 0.88 | 1.41 | 0.70 |
| Comp. Ex. 31 | 0.83 | 1.12 | 0.40 | 0.21 | 0.032 | absent | 1.05 | 1.22 | 0.75 |
| Comp. Ex. 32 | 0.83 | 1.12 | 0.41 | 0.20 | 0.042 | absent | 1.05 | 1.89 | 0.79 |
| Comp. Ex. 33 | 0.45 | 1.15 | 0.04 | 0.03 | 0.007 | present | 1.02 | 1.16 | 1.10 |

Table 6 (continued)

| | Membrane performance | | | | | |
|---|---|---|---|---|---|---|
| | Li removal rate (%) | Mg removal rate (%) | Monovalent ion/polyvalent ion selectivity | Glucose permeability (%) [B] | Sucrose permeability (%) [C] | Glucose/sucrose selectivity |
| Comp. Ex. 16 | 68.00 | 99.32 | 47 | 4.8 | 1.0 | 5 |
| Comp. Ex. 17 | 71.40 | 99.49 | 56 | 4.3 | 0.8 | 6 |
| Comp. Ex. 18 | 76.16 | 99.55 | 53 | 3.6 | 0.7 | 5 |
| Comp. Ex. 19 | 66.64 | 99.24 | 44 | 5.0 | 1.1 | 4 |
| Comp. Ex. 20 | 78.20 | 99.25 | 29 | 3.3 | 1.1 | 3 |
| Comp. Ex. 21 | 65.00 | 99.45 | 64 | 5.3 | 0.8 | 6 |
| Comp. Ex. 22 | 68.25 | 99.51 | 65 | 4.8 | 0.6 | 8 |
| Comp. Ex. 23 | 72.80 | 99.54 | 59 | 4.1 | 0.5 | 8 |
| Comp. Ex. 24 | 63.70 | 99.38 | 59 | 5.4 | 0.9 | 6 |
| Comp. Ex. 25 | 74.75 | 99.40 | 42 | 3.8 | 0.9 | 4 |

(continued)

| | Membrane performance | | | | | |
| --- | --- | --- | --- | --- | --- | --- |
| | Li removal rate (%) | Mg removal rate (%) | Monovalent ion/polyvalent ion selectivity | Glucose permeability (%) [B] | Sucrose permeability (%) [C] | Glucose/sucrose selectivity |
| Comp. Ex. 26 | 64.00 | 99.46 | 67 | 5.4 | 0.8 | 7 |
| Comp. Ex. 27 | 67.20 | 99.50 | 66 | 4.9 | 0.6 | 8 |
| Comp. Ex. 28 | 71.68 | 99.55 | 63 | 4.2 | 0.5 | 8 |
| Comp. Ex. 29 | 62.72 | 99.39 | 61 | 5.6 | 0.9 | 6 |
| Comp. Ex. 30 | 73.60 | 99.41 | 44 | 4.0 | 0.9 | 4 |
| Comp. Ex. 31 | 60.50 | 98.10 | 21 | 5.9 | 2.9 | 2 |
| Comp. Ex. 32 | 62.50 | 97.50 | 15 | 5.6 | 3.8 | 2 |
| Comp. Ex. 33 | 99.30 | 99.60 | 2 | 0.1 | 0.6 | 0 |

As shown in Tables 1 to 6, the composite semipermeable membranes in Examples 1 to 17, in which R1 and R2 are each 0.30 nm or more and 2.00 nm or less and $0.90 \leq R1/R2 \leq 1.10$ is satisfied, exhibit monovalent ion/divalent ion selectivity under an acidic condition higher than that of the composite semipermeable membranes in Comparative Examples 1 to 33.

It can be seen from the comparison between Examples 4 and 5 and Examples 11 and 12 that the composite semipermeable membranes satisfying $0.31 \leq P2/P1 \leq 0.35$, $P3/P2 \leq 0.09$, and $P4/P1 \leq 0.005$ exhibit more excellent monovalent ion/divalent ion selectivity.

It can be seen from the comparison between Example 1 and Example 3 that the monovalent ion/polyvalent ion selectivity is improved by satisfying $Nb/Nd \leq 0.80$.

It can be seen from the comparison between Example 8 and Example 9 that the monovalent ion/polyvalent ion selectivity is improved by setting Nb to $1.0 \times 10^{-23}$ mol/nm$^2$ or less.

It can be seen that Examples 6 to 17, in which the separation functional layer has a pleated structure, can be operated at a pressure lower than that of Examples 1 to 5, in which the separation functional layer does not have a pleated structure.

Although the present invention has been described in detail with reference to specific embodiments, it is apparent to those skilled in the art that various changes and modifications can be made without departing from the spirit and scope of the present invention. Note that, the present application is based on a Japanese Patent Application (No. 2022-192377) filed on November 30, 2022, a Japanese Patent Application (No. 2022-192378) filed on November 30, 2022, and a Japanese Patent Application (No. 2023-169359) filed on September 29, 2023, the contents of which are incorporated herein by reference. All references cited herein are incorporated as a whole.

REFERENCE SIGNS LIST

1 composite semipermeable membrane
2 substrate
3 porous support layer
4 separation functional layer
6 water collection pipe
7 first end plate
8 second end plate
11 feed-side flow channel material
12 permeation-side flow channel material
20 envelope-shaped membrane
26 wound body
100 composite semipermeable membrane element
101 feed water
102 permeated water

103 concentrated water
201 pleat height
202 thickness of separation functional layer
P reference point
X1 tangent line of outer surface of thin membrane passing through reference point P
X2 tangent line of inner surface of thin membrane parallel to tangent line X1
Y0 normal line passing through reference point P
Y1, Y2 straight line parallel to normal line Y0
a, b, c, d, e each region obtained by dividing separation functional layer into five regions

**Claims**

1. A composite semipermeable membrane comprising:

    a porous support layer; and
    a separation functional layer located on one surface side of the porous support layer, wherein
    the separation functional layer contains a semi-aromatic crosslinked polyamide,
    in the composite semipermeable membrane, a surface on a separation functional layer side is defined as a first surface and a surface on a side opposite to the first surface is defined as a second surface, and
    when the composite semipermeable membrane is irradiated with a positron beam from a first surface side, an average pore diameter R1 and an average pore diameter R2 of the separation functional layer derived from a positron annihilation lifetime measurement method are each 0.30 nm or more and 2.00 nm or less, and $0.90 \leq R1/R2 \leq 1.10$ is satisfied,
    R1: average pore diameter under condition of positron beam intensity of 0.1 keV, and
    R2: average pore diameter under condition of positron beam intensity of 0.5 keV.

2. The composite semipermeable membrane according to claim 1, wherein the average pore diameter R1 is 0.55 nm or more and 1.00 nm or less.

3. The composite semipermeable membrane according to claim 1 or 2, wherein in a cross section of the separation functional layer perpendicular to a surface of the composite semipermeable membrane, a total number P1 of pores having a pore diameter of 0.30 nm or more and 1.20 nm or less, a total number P2 of pores having a pore diameter of 0.50 nm or more and less than 0.80 nm, a total number P3 of pores having a pore diameter of 0.80 nm or more and 1.20 nm or less, and a total number P4 of pores having a pore diameter of more than 1.20 nm satisfy $0.20 < P2/P1 < 0.40$, $P3/P2 < 0.20$, and $P4/P1 \leq 0.01$.

4. The composite semipermeable membrane according to claim 1 or 2, wherein in a cross section of the separation functional layer perpendicular to a surface of the composite semipermeable membrane, when regions obtained by dividing the separation functional layer into five regions at an equal interval from the first surface side toward a second surface side are defined as region a to region e, an amino group density Nb in the region b and an amino group density Nd in the region d satisfy $Nb/Nd \leq 0.80$.

5. The composite semipermeable membrane according to claim 4, wherein the Nb is $1.0 \times 10^{-23}$ mol/nm$^2$ or less.

6. The composite semipermeable membrane according to claim 1 or 2, wherein in a case where a glucose permeability when 1000 ppm of a glucose aqueous solution having a temperature of 25°C and a pH of 6.5 is permeated through the composite semipermeable membrane at an operation pressure of 0.5 MPa is defined as B, and a sucrose permeability when 1000 ppm of a sucrose aqueous solution having a temperature of 25°C and a pH of 6.5 is permeated through the composite semipermeable membrane at an operation pressure of 0.5 MPa is defined as C, B/C is 10 or more.

7. The composite semipermeable membrane according to claim 1 or 2, wherein the separation functional layer has a hollow pleated structure.

8. A composite semipermeable membrane element comprising the composite semipermeable membrane according to claim 1 or 2.

9. A filtration device comprising the composite semipermeable membrane element according to claim 8.

# FIG. 1

# FIG. 2

*FIG. 3*

EP 4 628 199 A1

*FIG. 4*

## INTERNATIONAL SEARCH REPORT

International application No.

**PCT/JP2023/042999**

### A. CLASSIFICATION OF SUBJECT MATTER

***B01D 71/56***(2006.01)i; ***B01D 63/10***(2006.01)i; ***B01D 69/00***(2006.01)i; ***B01D 69/02***(2006.01)i; ***B01D 69/10***(2006.01)i; ***B01D 69/12***(2006.01)i

FI:   B01D71/56; B01D63/10; B01D69/00; B01D69/02; B01D69/10; B01D69/12

According to International Patent Classification (IPC) or to both national classification and IPC

### B. FIELDS SEARCHED

Minimum documentation searched (classification system followed by classification symbols)

B01D71/56; B01D63/10; B01D69/00; B01D69/02; B01D69/10; B01D69/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2011/152484 A1 (TORAY INDUSTRIES, INC.) 08 December 2011 (2011-12-08) claims, paragraphs [0016]-[0132], examples | 1-9 |
| A | WO 2016/084958 A1 (TORAY INDUSTRIES, INC.) 02 June 2016 (2016-06-02) claims, paragraphs [0013]-[0114], examples | 1-9 |
| A | JP 2007-277298 A (NITTO DENKO CORP) 25 October 2007 (2007-10-25) claims, paragraphs [0024]-[0043], examples | 1-9 |
| A | WO 2021/085600 A1 (TORAY INDUSTRIES, INC.) 06 May 2021 (2021-05-06) claims, paragraphs [0013]-[0114], examples | 1-9 |
| A | JP 2014-233652 A (TORAY INDUSTRIES, INC.) 15 December 2014 (2014-12-15) claims, paragraphs [0015]-[0096], examples | 1-9 |
| A | JP 10-225629 A (PALL CORP) 25 August 1998 (1998-08-25) claims, paragraphs [0015]-[0041], examples | 1-9 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 January 2024** | **16 January 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2023/042999**

| Patent document cited in search report | | | Publication date (day/month/year) | Patent family member(s) | | | Publication date (day/month/year) |
|---|---|---|---|---|---|---|---|
| WO | 2011/152484 | A1 | 08 December 2011 | US | 2014/0224726 | A1 | |
| | | | | claims, paragraphs [0023]-[0140], examples | | | |
| | | | | JP | 2013-150985 | A | |
| | | | | EP | 2578303 | A1 | |
| | | | | CN | 102917776 | A | |
| | | | | KR | 10-2013-0090759 | A | |
| WO | 2016/084958 | A1 | 02 June 2016 | US | 2017/0326506 | A1 | |
| | | | | claims, paragraphs [0025]-[0160], examples | | | |
| | | | | EP | 3225299 | A1 | |
| | | | | CN | 106999868 | A | |
| | | | | KR | 10-2017-0093808 | A | |
| JP | 2007-277298 | A | 25 October 2007 | (Family: none) | | | |
| WO | 2021/085600 | A1 | 06 May 2021 | (Family: none) | | | |
| JP | 2014-233652 | A | 15 December 2014 | (Family: none) | | | |
| JP | 10-225629 | A | 25 August 1998 | EP | 228072 | A2 | |
| | | | | claims, p. 3, line 15 to p. 7, line 53, examples | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007277298 A
- JP 2003534422 A
- WO 2021085600 A
- JP S4414216 B
- JP H0411928 B
- JP H11226366 A
- JP 2022192377 A
- JP 2022192378 A
- JP 2023169359 A

**Non-patent literature cited in the description**

- Radiation Physics and Chemistry. Pergamon, 2000, vol. 58, 603